# EUROPEAN PATENT APPLICATION

(11) **EP 1 577 893 A2**
(43) Date of publication of application: **21.09.2005**
(21) Application number: 05251418.9
(22) Date of filing: 09.03.2005
(51) Int. Cl.: G11B 23/03

(54) **Disk cartridge**

(30) Priority: 16.03.2004 JP 2004075046; 16.03.2004 JP 2004075048; 18.03.2004 JP 2004078438; 26.03.2004 JP 2004091250
(71) Applicant: FUJI PHOTO FILM CO., LTD., Kanagawa (JP)
(72) Inventor: Oishi, Kengo, Odawara-shi, Kanagawa (JP); Kato, Shinichi, Odawara-shi, Kanagawa (JP)
(74) Representative: Stevens, Jason Paul

(57) **Abstract**

A disk cartridge includes: a disk medium on one face of which a recording surface is formed and on the other face of which a non-recording surface is formed; a casing having a disk opening which allows removal of the disk medium, exposing the non-recording surface, and an opening which allows access to the recording surface, being opened and closed by a shutter member; and a disk holder which is rotatably provided in the casing, and which presses and holds the non-recording surface when the disk medium is in storage, and is separated from the non-recording surface when the disk medium is in operation and when taken out, the disk holder being configured such that it will not protrude over the top surface of the casing, when viewed from the side, except when the disk medium is to be taken out.

## Description

### BACKGROUND OF THE INVENTION

### Field of the Invention

The present invention relates to a disk cartridge with which a disk medium to be used as a recording/reproducing medium for various pieces of information, such as an image, is accommodated in a casing.

### Description of the Related Art

For example, as a recording/reproducing medium for computers and an image recording/reproducing medium, a disk medium, such as an optical disk or a magnetooptical disc, is used. When such a disk medium is used for carrying out recording or reproducing, the disk medium is loaded to a disk drive apparatus, and rotated by the rotating spindle while a laser beam or both a laser beam and a magnetic field being applied to the recording layer of the disk medium by the recording head of the drive apparatus which accesses to the recording surface of the disk medium. In this way, when information is to be recorded on the disk medium, pit formation, phase change, flux reversal or the like due to the decomposition and/or temperature rise of the recording layer is caused for information recording. On the other hand, when information is to be reproduced from the disk medium, the difference in reflectivity or polarizing angle of the laser beam is read out by the reproducing head for reproduction of the recorded information.

With such an increase in the recording capacity of the disk medium, a disk cartridge which accommodates a disk medium in a casing in order to prevent dirt, dust, and the like from being deposited on the recording surface (the covering layer which coats the recording surface) is known (for example, see Japanese Patent Application Laid-Open (JP-A) No. 2003-115184). With such a disk cartridge, an opening for accessing to the center hole and the recording surface of the disk medium is provided in the casing. The opening is opened and closed by shutter members.

However, for a disk cartridge as mentioned above, no mechanism for holding the disk medium with respect to the casing is provided. Therefore, a problem that the disk medium can rattle in the casing during transportation or the like has been presented. If the disk medium rattles, resulting in it being damaged, or the casing or the shutter member getting damaged, and thus occurrence of dirt and dust, such as abrasion chips, and failure of recording/reproducing (dropout) may be caused.

Further, a disk cartridge which is configured such that it is made thinner by providing a disk opening for allowing removing the disk medium at the top surface (the top plate) which is opposite to the bottom surface (the bottom plate) provided with an opening for accessing to the disk medium in the casing is known (for example, see JP-A No. 2003-242740). Thus, if the casing of the disk cartridge is constructed thinner, the disk drive apparatus can be designed to be thinner, which gives an advantage of less space being required.

Further, in the disk cartridge for which a disk opening is provided, a disk medium of single-sided recording type is mainly accommodated, and the casing is provided with a disk holder for preventing the disk medium from coming off from the disk opening. In other words, a disk holder formed in a predetermined size is, for example, provided rotatably at the rear portion of the casing being urged toward the disk medium, and this disk holder holds down a part of the top surface (the non-recording surface) of the disk medium accommodated in the casing. In this way, the disk medium is prevented from coming off from the casing, and is also prevented from rattling during transportation and the like.

However, a disk cartridge configured as this presents a problem that, when the disk cartridge is loaded to a disk drive apparatus, the disk holder is lifted to a predetermined level in order to allow the disk medium to be rotated, but if the predetermined level is too high, the advantage of the thin construction is cancelled. In addition, with a disk cartridge configured as this, since the non-recording surface of the disk medium is used as a printing surface, there is a possibility that of the printing surface can be damaged by the pressing force of the disk holder.

Further, when a disk cartridge for which such a disk holder is provided is to be handled, the user often holds the rear portion including the disk holder to load the disk cartridge to the disk drive apparatus. However, the disk holder is formed of a plastic material and only the tip end presses and holds the disk medium, thus if the casing including the disk holder is held, the disk holder can be easily deflected due to the pressing force, which gave operational uneasiness to the user in some cases.

On the other hand, if the disk holder is formed of metal, the reduction in strength can be minimized, however, in some cases, the disk holder caused damage to the non-recording surface of the disk medium. Since the non-recording surface is used as a printing surface, if the printing surface is damaged, there arises an undesirable problem also from the viewpoint of decorative design. Therefore, it is preferable that the disk holder to be formed of a plastic material, however, a plastic disk holder presents problems as described above, thus improving the strength thereof has been a subject.

Even with a disk cartridge provided with such a disk holder, the disk medium rattled during transportation or the like and caused damage to the disk medium or the casing (the peripheral wall constituting the disk opening), resulting in occurrence of abrasion chips in some cases. If, in order to avoid this, the urging force on the disk holder is increased (excessively pressing the disk medium), and there may arise a problem of the non-recording surface of the disk medium, which is used as a printing surface, being damaged by the pressing force of the disk holder.

Still further, a disk cartridge provided with a disk opening gives an advantage that the disk medium can be taken out from the disk cartridge for use. Therefore, the disk holder is required to be configured such that it can be rotated (rotated) toward the rear through a large angle, and with the disk cartridge as disclosed in JP-A No. 2003-242740, one end of a torsional spring is retained to the disk holder, and the other end is retained to the casing in order to urge the disk holder toward the disk medium. Therefore, when the disk holder is to be rotated toward the rear through a large angle, the other end of the torsional spring is disconnected from the casing.

In other words, with this disk cartridge, the lock member on the casing side for retaining the other end of the torsional spring is slidably constructed, and when the disk holder is urged toward the disk medium, the lock member is used to anchor the other end of the torsional spring, while, when the disk holder is to be rotated toward the rear through a large angle, the other end of the torsional spring is released from the retainment.

However, such a configuration as described above presents a problem that, every time the disk holder is rotated to the rear, there is the need for the lock member being slid, which is a bothersome operation. In addition, the necessity for sliding the lock member increases the number of parts, and makes the construction complicated, which is a second problem. If, to avoid this, the design is changed such that the torsional spring is always retained, the torsional spring is subjected to repeated bending operation at an excessive angle, thus it tends to cause fatigue failure, which is a third problem.

### SUMMARY OF THE INVENTION

In consideration of the above-mentioned problems, an object of the present invention is to provide a disk cartridge with which the advantage of the thin construction will not be cancelled in operation of the disk medium, and there is no possibility of the printing surface, which is the non-recording surface, being damaged in storage.

Another object is to provide a disk cartridge with which, even if the casing, including the disk holder formed of plastic resin, is held, the deflection deformation thereof is capable of being suppressed, and thus no operational uneasiness is given to the user.

Another object is to provide a disk cartridge with which the operability of the disk holder can be improved.

Another object is to provide a disk cartridge with which, during transportation and the like, the disk medium can be prevented from rattling without the printing surface of the disk medium being damaged.

A first aspect of the present invention provides a disk cartridge including: a disk medium on one face of which a recording surface is formed and on the other face of which a non-recording surface is formed; a casing having a disk opening which allows removal of the disk medium, exposing the non-recording surface, and an opening which allows access to the recording surface, being opened and closed by a shutter member; and a disk holder which is rotatably provided in the casing, and which presses and holds the non-recording surface when the disk medium is in storage, and is separated from the non-recording surface when the disk medium is in operation and when taken out, the disk holder being configured such that it will not protrude over the top surface of the casing, when viewed from the side, except when the disk medium is to be taken out.

With this disk cartridge, the disk holder is configured such that it will not be protruded over the top surface of the casing, when viewed from the side, except when the disk medium is to be taken out. Therefore, the advantage of the thin construction will not be cancelled in operation of the disk medium, and the drive apparatus can be made still thinner.

In the first aspect of the present invention, the disk holder may be configured such that it is capable of being held in the positions corresponding to the three different statuses: a) when the disk medium is in storage; b) when the same is in operation; and c) when the same is taken out.

With this disk cartridge, the disk holder is configured such that it is capable of being held in the positions corresponding to the three different statuses, i.e., when the disk medium is in storage; when the same is in operation; and when the same is taken out. Therefore, in the respective statuses, i.e., when the disk medium is in storage (when it is not in use), when it is in use (when it is in operation), when the disk medium is taken out, and only the disk medium is loaded to the drive apparatus (when it is taken out), the disk holder 24 offers good handlability.

Further, the disk holder may be constituted by an arm which is rotatably supported in the casing, and to which an urging mechanism for urging the disk holder toward the disk medium is mounted, and a holding-down portion substantially in the shape of a crescent, when viewed from the top, that is connected to the tip of the arm.

With this disk cartridge, the disk holder is constituted by an arm which is rotatably supported in the casing, and to which an urging mechanism for urging the disk holder toward the disk medium is mounted, and a holding-down portion substantially in the shape of a crescent, when viewed from the top, that is connected to the tip end of the arm. Therefore, the disk holder will not interfere with the chucking area of the disk medium.

Moreover, when the disk medium is in storage, both ends of the holding-down portion abut the outer peripheral edge portion of the disk medium.

With this disk cartridge, when the disk medium is in storage, both ends of the holding-down portion abut the outer peripheral edge portion of the disk medium. Thus, there is no possibility of the holding-down portion (the disk holder) causing damage to the non-recording surface (printing surface).

Furthermore, a pair of the arms may be symmetrically provided, and to one arm, the urging mechanism is mounted, the other arm being pushed upward such that the holding-down portion is separated from the disk medium, when the disk medium is in operation.

With this disk cartridge, a pair of arms are symmetrically provided, and to one arm, the urging mechanism is mounted, the other arm being pushed upward such that the holding-down portion is separated from the disk medium, when the disk medium is in operation. In other words, because the urging mechanism for urging the disk holder is mounted to the arm other than that which is pushed upward, the urging mechanism will not interfere with the member which pushes upward the disk holder.

Moreover, the disk holder may be configured such that it is not capable of being separated from the casing.

With this disk cartridge, the disk holder is configured such that it is not capable of being separated from the casing. Therefore, no troubles, such as the disk holder 24 being lost, will be caused.

Further, at least on the top surface of the disk holder, an identification mechanism for identifying the disk holder may be provided.

With this disk cartridge, at least on the top surface of the disk holder, an identification mechanism for identifying the disk holder is provided. Therefore, the user can easily recognize that the disk holder is a member which is different from the casing (has a function different from that of the casing).

A second aspect of the present invention provides a disk cartridge including: a disk medium on one face of which a recording surface is formed and on the other face of which a non-recording surface is formed; a casing having a disk opening which permits removal of the disk medium, exposing the non-recording surface, and an opening which allows access to the recording surface, being opened and closed by a shutter member; and a disk holder which is rotatably provided in the casing, and which presses and holds the non-recording surface when the disk medium is not in use, and is separated from the non-recording surface when the disk medium is in use, wherein protrusions which abut the non-recording surface of the disk medium when the disk holder is deflected from the inner surface of the disk holder.

With this disk cartridge, protrusions which abut the non-recording surface of the disk medium when the disk holder is deflected are protruded from the inner surface of the disk holder. Therefore, if the rear portion of the casing, including the disk holder, is held, the deflection deformation of the disk holder is capable of being adequately suppressed. Therefore, no operational uneasiness is given to the user.

In the second aspect, the protrusions abut the outer peripheral edge portion of the disk medium.

With this disk cartridge, the protrusions abut the outer peripheral edge portion of the disk medium. Therefore, there is no possibility of the printing surface being damaged.

Further, the disk holder is constituted by an arm which is rotatably supported in the casing, and a holding-down portion substantially in the shape of a crescent, when viewed from the top, that is connected to the tip of the arm, the protrusions being provided in the vicinity of the connecting portion between the arm and the holding-down portion.

With this disk cartridge, the disk holder is constituted by an arm which is rotatably supported in the casing, and a holding-down portion substantially in the shape of a crescent, when viewed from the top, that is connected to the tip end of the arm, and the protrusions are provided in the vicinity of the connecting portion between the arm and the holding-down portion. Therefore, the deflection deformation of the disk holder is capable of being adequately suppressed with the protrusions.

In the second aspect, the protrusions may be formed in the shape of a column.

With this disk cartridge, the protrusions are formed in the shape of a column, and thus a sufficient rigidity can be secured. Therefore, the deflection deformation of the disk holder is capable of being adequately suppressed.

A third aspect of the present invention provides a disk cartridge including: a casing which joins an upper shell having a disk opening which allows removal of a disk medium, exposing a non-recording surface, to a lower shell having an opening which allows access to a recording surface, being opened and closed by a shutter member; a disk holder which is rotatably provided in the rear portion of the casing, and which presses and holds the non-recording surface when the disk medium is in storage, and is separated from the non-recording surface when the disk medium is in operation and when taken out; a first retaining protrusion which protrudes from the inner surface of the disk holder in front of the rotation axis of the disk holder in the casing; a second retaining protrusion which protrudes from the inner surface of the upper shell behind the rotation axis of the disk holder except on an imaginary line which passes through the first retaining protrusion and is orthogonalized with the rotation axis; and an urging mechanism which is stretched between the first retaining protrusion and the second retaining protrusion such that the urging mechanism is positioned under the rotation axis, when viewed from the side, when the disk medium is in storage, and is positioned above, when viewed from the side, said rotation axis when the disk medium is taken out.

Further, the urging mechanism may comprise a coil spring.

With this disk cartridge, a first retaining protrusion is protruded from the inner surface of the disk holder in front of the rotation axis thereof in the casing, and a second retaining protrusion is protruded from the inner surface of the upper shell behind the rotation axis thereof except on the line which passes through the first retaining protrusion and is orthogonalized with the rotation axis; and an urging mechanism (a coil spring) is stretched between the first retaining protrusion and the second retaining protrusion such that it is positioned under the rotation axis, when viewed from the side, when the disk medium is in storage, and it is positioned above, when viewed from the side, the rotation axis when the disk medium is removed.

Therefore, when the disk medium is in storage, the disk holder is adequately urged toward the disk medium, and where the disk medium is taken out, the disk holder is capable of being temporarily held in the taking-out (removing) position. Thus, the operability of the disk holder can be improved. Because the coil spring can create a spring force in the direction of stretch and that of torsion, thus, the disk holder can be stably and freely rotated with a minimum of effort. Therefore, the disposition location of the second retaining protrusion can be determined with a degree of freedom. Further, with the coil spring, the stress imposed per unit length can be reduced, as compared to the torsional spring, and thus a longer service life and an increased reliability can be obtained.

In the third aspect, the urging mechanism may have a substantially annular hook at least at one end, and the hook is slidably fitted to the first retaining protrusion.

With this disk cartridge, the urging mechanism has a substantially annular hook at least at one end, and the hook is slidably fitted to the first retaining protrusion. Therefore, the urging mechanism can be easily mounted, and causing the urging mechanism to be positioned under the rotation axis, when the disk medium is in storage, and causing it to be above the rotation axis, when the disk medium is taken out, can be easily and positively realized. In addition, the length of the first retaining protrusion is defined (extended) such that the urging mechanism is positioned under the rotation axis when the disk medium is in storage. In this way, the hook will not come off from the first retaining protrusion. Further, when the disk holder is rotated, the hook is caused to slide toward the root of the first retaining protrusion, thus will not come off from the first retaining protrusion even when the disk medium is taken out.

Further, an accommodating portion which allows the movement of the urging mechanism when the disk holder is rotated to the position for removing the disk medium may be formed in the upper shell.

With this disk cartridge, an accommodating portion which allows the movement of the urging mechanism (the coil spring) is formed in the upper shell. Therefore, even the disk holder with which the urging mechanism is stretched between itself and the casing, the disk holder is capable of being freely and easily rotated.

A fourth aspect of the present invention provides a disk cartridge including: a disk medium on one face of which a recording surface is formed and on the other face of which a non-recording surface is formed; a casing having a disk opening which allows removal of the disk medium, exposing the non-recording surface, and an opening which allows access to the recording surface, being opened and closed by a shutter member; and a disk holder which is rotatably provided in the rear portion of the casing, and which presses and holds the non-recording surface when the disk medium is not in use, and is separated from the non-recording surface when the disk medium is in use, the disk holder pressing the outer peripheral edge portion in the rear portion of the disk medium toward the front side of the disk cartridge.

With this disk cartridge, the disk holder presses the outer peripheral edge portion in the rear portion of the disk medium toward the front side of the disk cartridge. Therefore, the disk medium is urged toward the front side to abut the front end inner surface of the inner peripheral wall constituting the disk opening. Thus, the disk medium is held by the front end inner surface and the disk holder. In this way, the disk medium is prevented from rattling during transportation and the like. In addition, because the disk holder presses the outer peripheral edge portion of the disk medium, there is no possibility of the printing surface being damaged.

In the fourth aspect, the disk holder may have position-restricting portions which are brought into contact with the outer peripheral edge portion in the radial direction from the outside of the disk medium.

With this disk cartridge, the disk holder has position-restricting portions which are brought into contact with the outer peripheral edge portion in the radial direction from the outside of the disk medium. Therefore, the disk medium is caused to be adequately moved by the position-restricting portions toward the front side.

Further, the position-restricting portions may be formed of a material which has a high coefficient of friction with respect to the disk medium.

Moreover, the material which has a high coefficient of friction may comprise an elastic material.

With this disk cartridge, the position-restricting portions are formed of an elastic material which has a high coefficient of friction with respect to the disk medium. Therefore, the disk medium can be efficiently pressed toward the front side, and the movement (rattling) of the disk medium in the radial direction and the circumferential direction can be adequately suppressed.

### BRIEF DESCRIPTION OF THE DRAWINGS

Fig. 1 is a schematic perspective view showing a disk cartridge according to a first embodiment of the present invention with a disk medium excluded therefrom;
Fig. 2 is a schematic plan view showing the outer appearance of the disk cartridge in Fig. 1;
Fig. 3 is a schematic exploded perspective view showing the composition of the disk cartridge in Fig. 1;
Fig. 4 is a schematic exploded perspective view showing the construction of a critical portion of the disk cartridge in Fig. 1;
Fig. 5 is a schematic sectional view showing geometry of a bearing supporting the shaft of the disk holder and that of a shaft holder in the disk cartridge in Fig. 1;
Fig. 6A is an operation explanatory drawing for a disk support in the disk cartridge in Fig. 1;
Fig. 6B is an operation explanatory drawing for the disk support in the disk cartridge in Fig. 1;
Fig. 6C is an operation explanatory drawing for the disk support in the disk cartridge in Fig. 1;
Fig. 6D is an operation explanatory drawing for the disk support in the disk cartridge in Fig. 1;
Fig. 7A is an operation explanatory drawing for the disk holder shown with a section taken along the line X-X in Fig. 2;
Fig. 7B is an operation explanatory drawing for the disk holder shown with a section taken along the line X-X in Fig. 2;
Fig. 7C is an operation explanatory drawing for the disk holder shown with a section taken along the line X-X in Fig. 2;
Fig. 8A is a schematic plan view of the disk holder in the disk cartridge in Fig. 1, showing an example of a mechanism for identification of the disk holder;
Fig. 8B is a schematic plan view of the disk holder in the disk cartridge in Fig. 1, showing an example of a mechanism for indication of the operating function of the disk holder;
Fig. 9 is an operation explanatory drawing for a first shutter member and a second shutter member in the disk cartridge in Fig. 1;
Fig. 10 is an operation explanatory drawing for the first shutter member and the second shutter member in the disk cartridge in Fig. 1;
Fig. 11 is an operation explanatory drawing for the first shutter member and the second shutter member in the disk cartridge in Fig. 1;
Fig. 12 is an operation explanatory drawing for the first shutter member and the second shutter member in the disk cartridge in Fig. 1;
Fig. 13 is an operation explanatory drawing for the first shutter member and the second shutter member in the disk cartridge in Fig. 1;
Fig. 14 is a schematic perspective view showing a disk cartridge according to a second embodiment of the present invention with a disk medium excluded therefrom;
Fig. 15 is a schematic plan view showing the outer appearance of the disk cartridge in Fig. 14;
Fig. 16 is a schematic exploded perspective view showing the composition of the disk cartridge in Fig. 14;
Fig. 17 is a schematic exploded perspective view showing the construction of a critical portion of the disk cartridge in Fig. 14;
Fig. 18A is an operation explanatory drawing for the disk holder shown with a section taken along the line X-X in Fig. 15;
Fig. 18B is an operation explanatory drawing for the disk holder shown with a section taken along the line X-X in Fig. 15;
Fig. 18C is an operation explanatory drawing for the disk holder shown with a section taken along the line X-X in Fig. 15;

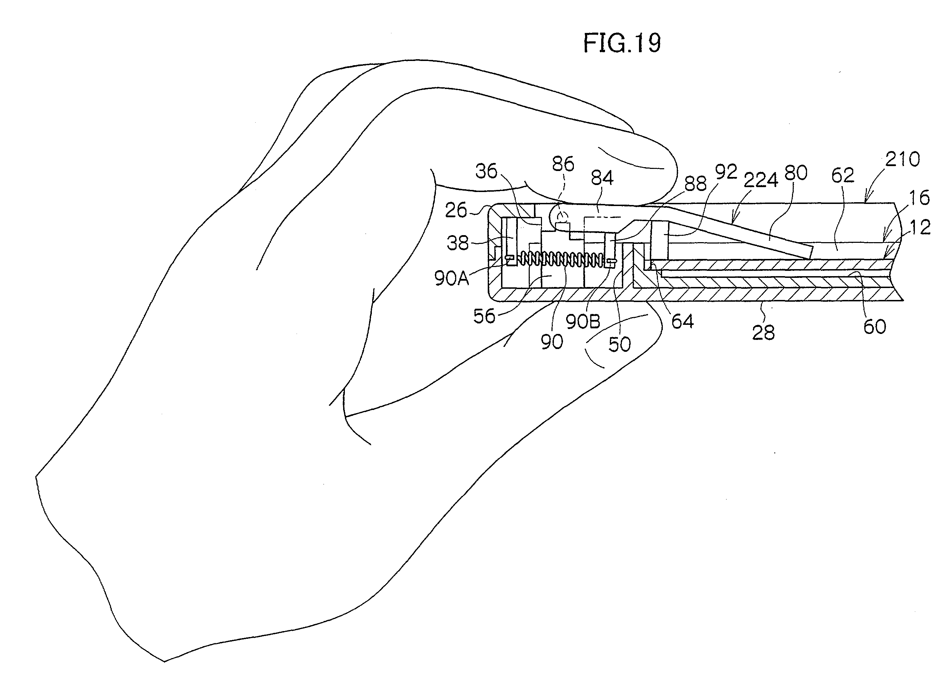

Fig. 19 is an explanatory drawing showing a user's hand holding the rear portion of a casing including the disk holder in the disk cartridge in Fig. 14;
Fig. 20 is an operation explanatory drawing for the first shutter member and the second shutter member in the disk cartridge in Fig. 14;
Fig. 21 is a schematic perspective view showing a disk cartridge according to a third embodiment of the present invention with a disk medium excluded therefrom;
Fig. 22 is a schematic plan view showing the outer appearance of the disk cartridge in Fig. 21;
Fig. 23 is a schematic exploded perspective view showing the composition of the disk cartridge in Fig. 21;
Fig. 24 is a schematic exploded perspective view showing the construction of a critical portion of the disk cartridge in Fig. 21;
Fig. 25A is an operation explanatory drawing for the disk holder shown with a section taken along the line X-X in Fig. 22;
Fig. 25B is an operation explanatory drawing for the disk holder shown with a section taken along the line X-X in Fig. 22;
Fig. 25C is an operation explanatory drawing for the disk holder shown with a section taken along the line X-X in Fig. 22;
Fig. 26 is an operation explanatory drawing for the first shutter member and the second shutter member in the disk cartridge in Fig. 21;
Fig. 27 is a schematic perspective view showing a disk cartridge according to a fourth embodiment of the present invention with a disk medium excluded therefrom;
Fig. 28 is a schematic plan view showing the outer appearance of the disk cartridge in Fig. 27;
Fig. 29 is a schematic exploded perspective view showing the composition of the disk cartridge in Fig. 27;
Fig. 30 is a schematic exploded perspective view showing the construction of a critical portion of the disk cartridge in Fig. 27;
Fig. 31 is a schematic sectional view showing geometry of a bearing supporting a shaft of a disk holder and that of a shaft holder in Fig. 27;
Fig. 32A is an operation explanatory drawing for the disk holder shown with a section taken along the line X-X in Fig. 28;
Fig. 32B is an operation explanatory drawing for the disk holder shown with a section taken along the line X-X in Fig. 28;
Fig. 32C is an operation explanatory drawing for the disk holder shown with a section taken along the line X-X in Fig. 28;
Fig. 33A is a schematic sectional view showing a disk medium held by the disk holder in Fig. 27;
Fig. 33B is a schematic sectional view showing a disk medium held by the disk holder in Fig. 27;
Fig. 34 is an operation explanatory drawing for a first shutter member and a second shutter member in the disk cartridge in Fig. 27;
Fig. 35 is an operation explanatory drawing for the first shutter member and the second shutter member in the disk cartridge in Fig. 27;
Fig. 36 is an operation explanatory drawing for the first shutter member and the second shutter member in the disk cartridge in Fig. 27;
Fig. 37 is an operation explanatory drawing for the first shutter member and the second shutter member in the disk cartridge in Fig. 27; and
Fig. 38 is an operation explanatory drawing for the first shutter member and the second shutter member in the disk cartridge in Fig. 27.

### DETAILED DESCRIPTION OF THE INVENTION

Hereinbelow, the best mode for carrying out the invention will be described in detail on the basis of the examples as illustrated in the drawings.

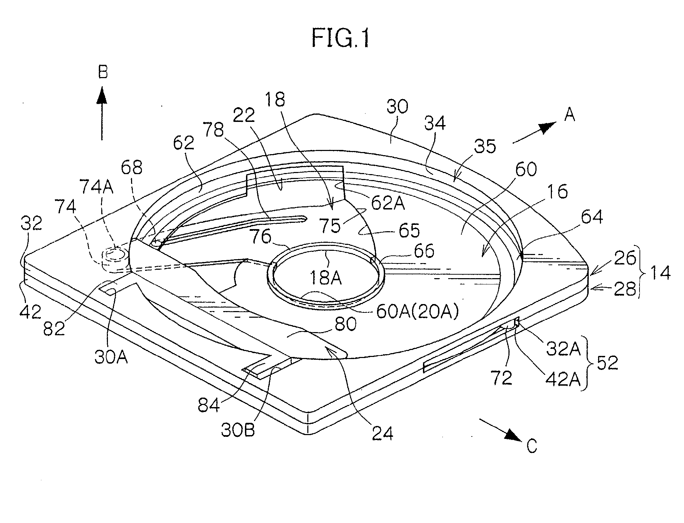

First, a disk cartridge 10 according to a first embodiment of the present invention will be described. An arrow A shown in Fig. 1 indicates the direction of loading a disk cartridge 10 into a disk drive apparatus (hereinbelow simply called "drive apparatus") and, for convenience of explanation, a side which is indicated by the arrow A is defined as a front side. Further, the direction indicated by arrow B, which is orthogonal to arrow A, is defined as an upper side, and the direction indicated by arrow C, which is orthogonal to arrow A and arrow B, is defined as a right side. In the description hereinbelow, a wording of "in storage" may be used for "not in use", and a wording of "in operation" for "in use".

As shown in Fig. 1 to Fig. 3, the disk cartridge 10 is mainly structured by having a disk medium 12 as an information recording/reproducing medium formed in the shape of a disk, a casing 14 for accommodating the disk medium 12, an inner rotor 16 having a first shutter member 60 which is capable of opening and closing an opening 20 provided in the bottom of the casing 14 (a window 20B for recording and/or reproducing head) for accessing to the disk medium 12 and a second shutter member 18, a disk support 22 which is vertically moved in synchronism with the rotation of the inner rotor 16, and a disk holder 24 which holds the disk medium 12 such that, when the disk medium 12 is held, the disk medium will not drop out from a disk opening 35 provided at the top surface of the casing 14.

The respective members mentioned above, excluding the disk medium 12, are formed mainly of synthetic resin. Further, a lock member which, when the disk cartridge 10 is not in use (when the disk medium 12 is in storage), prevents the inner rotor from being rotated in order to maintain the closed state of the opening 20 (the window 20B for recording and/or reproducing head) is provided, but the illustration and description thereof are omitted.

First, the disk medium 12 will be described. One surface (the top surface) of the disk medium 12 serves as a non-recording surface 12A, while the other surface (the bottom surface) a recording surface 12B. In the axis portion of the disk medium 12, a circular center hole 12C is provided.

The non-recording surface 12A is a printing surface on which a print or the like is provided, and is always exposed to the outside by the disk opening 35 later described. Therefore, for example, if the contents of the disk medium 12, or the like, are printed on the non-recording surface 12A, the user can easily comprehend the contents of the disk medium 12. In addition, by enhancing the graphical design function of the non-recording surface 12A (the printing surface), the graphical design function of the entire disk cartridge 10 can be improved.

In the portion of the recording surface 12B excluding an outer peripheral edge portion 12E and a predetermined region (a chucking area 12D later described) around the center hole 12C in the bottom of the disk medium 12, an annular recording layer is formed, being protected by a covering layer. The region between the center hole 12C and the recording surface 12B in the bottom of the disk medium 12 provides a chucking area 12D for a rotating spindle (not shown) of a drive apparatus to hold the disk medium 12, and also on the non-recording surface 12A side, a chucking area 12D is provided in the same location.

In other words, the disk medium 12 is configured such that, on the recording surface 12B (the bottom) side, it is held for rotation by the rotating spindle which is advanced from a hub hole 20A later described, and on the non-recording surface 12A side, the disk medium is held for rotation by a chucking member (not shown) which is advanced from the disk opening 35. In the present embodiment, the diameter (the outside diameter) of the disk medium is approximately 120 mm.

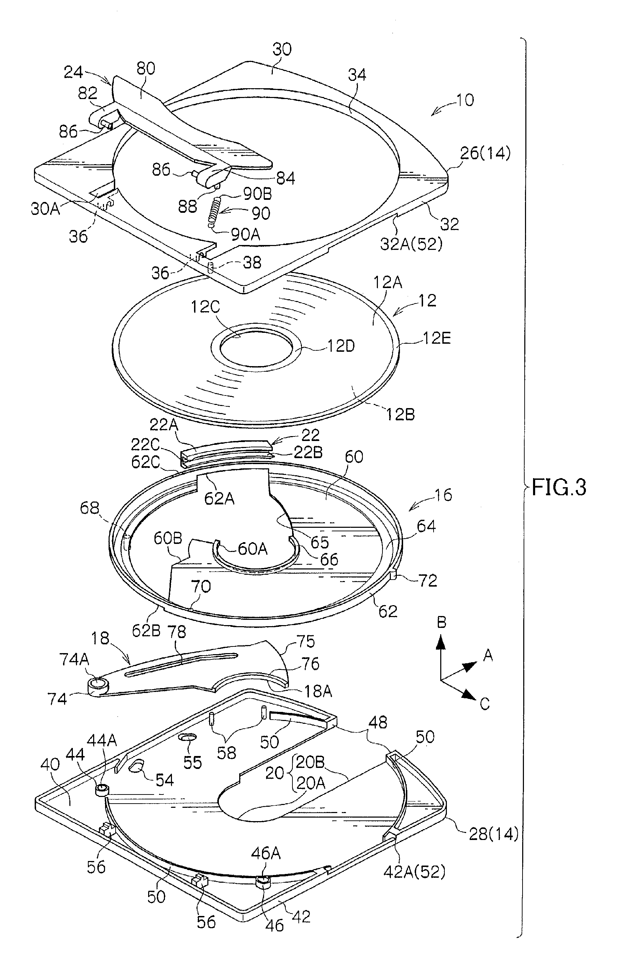

Next, the casing will be described. As shown in Fig. 3, the casing 14 is configured in the shape of a substantially rectangular flat container, with an upper shell 26 and a lower shell 28 each formed of synthetic resin being joined together. More particularly, when viewed from the top, the front edge of the casing 14 is formed in a substantially symmetric arc and both rear end corners are formed in an obliquely cut shape. This geometry prevents misloading of the drive cartridge 10 to the drive apparatus.

The upper shell 26 comprises a top plate 30 having a shape corresponding to that of the casing 14, when viewed from the top, and an outer peripheral wall 32 which is erected downward substantially along the outer peripheral edge portion of the top plate 30. In the top plate 30, the disk opening 35 is provided as a circular hole having a diameter slightly larger than the outside diameter of the disk medium 12 (i.e., a size so large that the disk medium 12 will not be contacted, even when rotated). In the inner peripheral edge portion of the disk opening 35, an inner peripheral wall 34 having a predetermined height is erected downward.

Inside of this inner peripheral wall 34, the disk medium 12 is rotatably accommodated. The disk opening 35 allows the disk medium 12 to be inserted into the casing 14, and to be taken out (removed) from the casing 14. Since the top plate 30 of the upper shell 26 is provided with the disk opening 35, no upward bulging portion is formed. Therefore, the casing 14 has an advantage that it can be constructed thinner than the casing of an encapsulated type cartridge with which no disk opening 35 is formed.

In the right wall in the outer peripheral wall 32, a substantially rectangular cutout 32A is formed. This cutout 32A, which is opposed to a cutout 42A in the lower shell 28 described later, constitutes a shutter operating window 52 through which an operating protrusion 72 of the inner rotor 16 described later is protruded. Further, in the rear portion of the top plate (including the inner peripheral wall 34), a cutout 30A, 30B for accommodating an arm 82, 84 of the disk holder 24 later described is formed.

From the inside surface of the top plate 30 at the rear side and at the right side than the one (right side) cutout 30B is protruded an retaining pin 38 as a second retaining protrusion for retaining a substantially annular hook 90A formed at one end of a coil spring 90 as an urging mechanism later described. The cutout 30B is cut out more widely than the cutout 30A on the retaining pin 38 side in order to allow the coil spring 90 to be moved when the disk holder 24 later described is rotated to the position where the disk medium 12 is to be taken out.

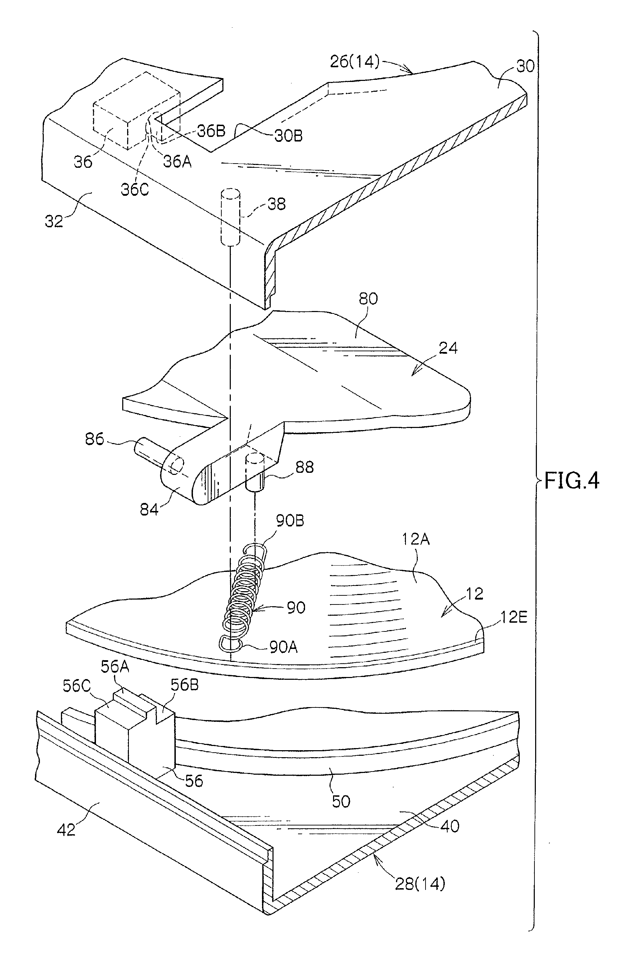

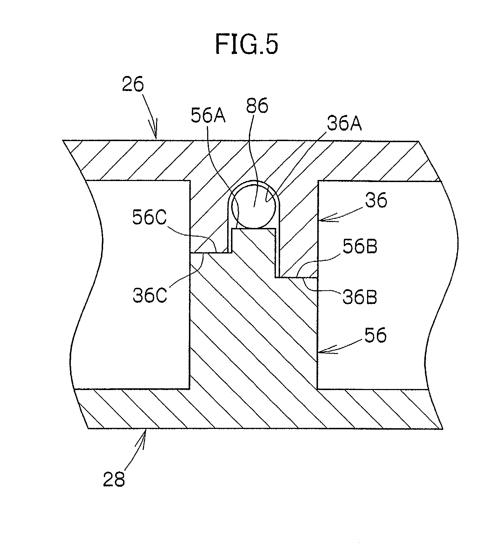

As shown in Fig. 4, from the inside surface of the rear of the top plate 30 between the cutouts 30A, 30B, bearings 36 are protruded, being separated from each other by a predetermined spacing, for rotatably holding shafts 86 provided for the arms 82, 84, being paired with shaft holders 56 protruded from the lower shell 28, in order to prevent dislocation of the shafts 86. As shown in Fig. 5, the respective bearings 36 have a groove 36A which is formed substantially in a shape of the letter "U" when viewed from the side. The groove 36A is formed such that the heights of a front wall 36B and a rear wall 36C constituting the groove 36A are different from each other, the front wall 36B being higher than the rear wall 36C, for example.

On the other hand, the lower shell 28 includes a bottom plate 40 having a shape substantially corresponding to the top plate 30 and an outer peripheral wall 42 having a shape substantially corresponding to the outer peripheral wall 32. The bottom plate 40 is provided with an opening 20. The opening 20 is constituted by the hub hole 20A which is substantially circular, having a diameter larger than the outside diameter of the center hole 12C in the disk medium 12, and slightly smaller than the outside diameter of the chucking area 12D (the inside diameter of the recording surface 12B), and the window 20B for recording and/or reproducing head that is substantially rectangular, being connected to the hub hole 20A at the front of the diameter line drawn in the right and left direction of the hub hole 20A, and is formed substantially in the shape of the letter "U" when viewed from the top, being opened toward the front side as a whole. The geometry of the hub hole 20A and the window 20B for recording and/or reproducing head is not limited to this, and they may be provided independently from each other.

The hub hole 20A is disposed such that it is substantially concentric with the accommodated disk medium 12, when the upper shell and the lower shell are joined together. When the disk cartridge 10 is not in use, the hub hole 20A, which is dimensioned as described above, exposes only the center hole 12C and the chucking area 12D to the outside, and does not expose, to the outside, the region where the recording layer is provided. The window 20B for recording and/or reproducing head that is provided to expose the recording surface 12B is expanded such that the left end edge thereof is located on the left side of the tangent line to the hub hole 20A that is along the longitudinal direction, and the front thereof is opened toward the front side, cutting out the outer peripheral wall 42.

In operation, the rotating spindle of the drive apparatus is advanced into the hub hole 20A, engaging with and holding the center hole 12C and the chucking area 12D of the disk medium 12 while rotation-driving the disk medium 12. Then, the recording and/or reproducing head of the drive apparatus is advanced into the window 20B for recording and/or reproducing head, carrying out recording or reproducing the information onto/from the disk medium 12. In this case, since the window 20B for recording and/or reproducing head is also opened toward the front side, it is capable of easily accessing the outermost boundary of the recording layer (the location where the inner periphery of the outer peripheral edge portion 12E is substantially reached).

From the inner surface of the rear portion of the bottom plate 40, a pair of bosses 44, 46 are protruded, being separated from each other by a predetermined spacing. The left side boss 44 is formed in a circle when viewed from the top, and the right side boss 46 is formed substantially in an oval which is elongated in the crosswise direction when viewed from the top. The respective bosses 44, 46 are provided with a positioning hole 44A, 46A. Into the respective positioning holes 44A, 46A, a positioning pin (not shown) of the drive apparatus is inserted for positioning the disk cartridge 10 in the drive apparatus.

Further, on the bottom plate 40 is erected an inner wall 50 in the shape of a rib for accommodating the inner rotor 16 described later inside so as to rotatably hold the inner rotor 16. This inner wall 50 is formed in the shape of a discontinuous circular arc having a diameter slightly larger than the diameter of the inner rotor 16 when viewed from the top. At each of the front ends of the right and left edges of the window 20B for recording and/or reproducing head is erected a dust-proof rib 48 which front end is connected to the outer peripheral wall 42, and which rear end is connected to the inner wall 50. The height of the dust-proof rib 48 and the inner wall 50 is equal to that of an annular wall 62 of the inner rotor 16.

In the right wall in the outer peripheral wall 42, a substantially rectangular cutout 42A corresponding to the cutout 32A formed in the outer peripheral wall 32 of the upper shell 26 is formed. Therefore, when the upper shell 26 and the lower shell 28 are joined together by screwing, ultrasonic welding or any other method for assembling the casing 14 with the ends of the outer peripheral walls 32, 42 being abutted to each other, the shutter operating window 52 through which the operating protrusion 72 of the inner rotor 16 is protruded is formed. This shutter operating window 52 is not limited to that provided in the right wall of the casing 14, but the disposition location may be changed appropriately according to the relation to the drive apparatus, the geometries of the inner rotor 16 (the first shutter member 60) and the second shutter member 18, and the like.

Moreover, from the inner surface of the rear portion of the bottom plate 40, the shaft holders 56 for rotatably supporting the shafts 86 of the disk holder 24 later described are protruded, being separated from each other by a predetermined spacing, and paired with the bearings 36 protruded from the upper shell 26. As shown in Figs. 4 and 5, this shaft holder 56 has a protruding strip-like portion 56A which is inserted between the front wall 36B and the rear wall 36C of the bearing 36 (into the groove 36A), being parallel with the shaft 86 and having a predetermined height, and shoulders 56B, 56C which are formed in front and rear of the protruding strip-like portion 56A, having different heights.

The shoulders 56B, 56C are formed in correspondence with the front wall 36B and the rear wall 36C such that the front shoulder 56B is lower and the rear shoulder 56C is higher, for example, and when the upper shell 26 is placed on the lower shell 28 for assembling the casing 14, in other words, when the end of the front wall 36B of the bearing 36 abuts the shoulder 56B of the shaft holder 56 and the end of the rear wall 36C of the bearing 36 abuts the shoulder 56C of the shaft holder 56, a space which allows the shaft 86 of the disk holder 24 to be rotatably held is formed between the groove 36A and the protruding strip-like portion 56A.

Besides these, on the inner surface of the bottom plate 40, as shown in Fig. 3, substantially oval recesses 54, 55 which are engaged with an engaging protrusion 68 protruded from the bottom of the inner rotor 16 are formed, being separated from each other by a predetermined spacing. The recesses 54, 55 are formed such that they have a gently sloped surface on the sides opposed to each other. Further, from the inner surface of the bottom plate 40 on the front side of the recesses 54, 55, a pair of guide pins 58 for supporting the disk support 22 later described such that the disk support 22 can be vertically moved with respect to the bottom plate 40 are protruded, being separated from each other by a predetermined spacing.

Next, the first shutter member 60 which is provided as an integral part of the inner rotor 16, and the second shutter member 18 will be described. The inner rotor 16 and the second shutter member 18 are disposed on the bottom plate 40 of the lower shell 28. With the first shutter member 60 and the second shutter member 18 being rotated in opposite directions, respectively, the opening 20, i.e., the window 20B for recording and/or reproducing head is opened and closed, and when the window 20B for recording and/or reproducing head is opened, a part of the recording surface 12B is exposed to the outside, whereby the recording and/or reproducing head of the drive apparatus is allowed to access the recording surface 12B.

The inner rotor 16 has the first shutter member 60 which faces the recording surface 12B of the disk medium 12 with a predetermined clearance therebetween, the annular wall 62 which allows the disk medium 12 to be accommodated inside, and an outer peripheral edge support portion 64 which is formed between the first shutter member 60 and the annular wall 62, being bulged upward for supporting the outer peripheral edge portion 12E on the recording surface 12B side of the disk medium 12 from below. When the casing 14 is assembled, the annular wall 62 is rotatably disposed inside the inner wall 50 of the lower shell 28, and outside the inner peripheral wall 34 of the upper shell 26, and the upper end of the annular wall 62 is covered by the upper shell 26 (the top plate 30).

In the central portion of the inner rotor 16, a cutout 60A in the shape of an arc, when viewed from the top, that corresponds to the hub hole 20A, and substantially in the left half of the inner rotor 16, a cutout 60B for accommodating the second shutter member 18 is formed. The cutout 60A is connected to the cutout 60B, and the right end edge of the cutout 60B that continues from the cutout 60A is formed in the shape of an arc, when viewed from the top, that is displaced to the outside of the right end edge of the window 20B for recording and/or reproducing head, when the opening 20 (the window 20B for recording and/or reproducing head) is opened, and is formed as an abutting portion 65 against which the second shutter member 18 is abutted.

Around the cutout 60A is protruded an inner peripheral edge support portion 66, in the shape of an arc, for supporting the chucking area 12D of the disk medium 12 from below. In a predetermined location on the bottom of the outer peripheral edge support portion 64 (the inner rotor 16) on the cutout 60B side is protruded an engaging protrusion 68 for moving the second shutter member 18 in synchronism with the rotation of the inner rotor 16 (the first shutter member 60). In a predetermined location on the top surface of the annular wall 62, an engaging convex 70 for lifting the disk holder 24 to a predetermined level is protruded. In a predetermined location on the outer peripheral surface of the annular wall 62, the operating protrusion 72 which is protruded through the shutter operating window 52 is provided in the radial direction.

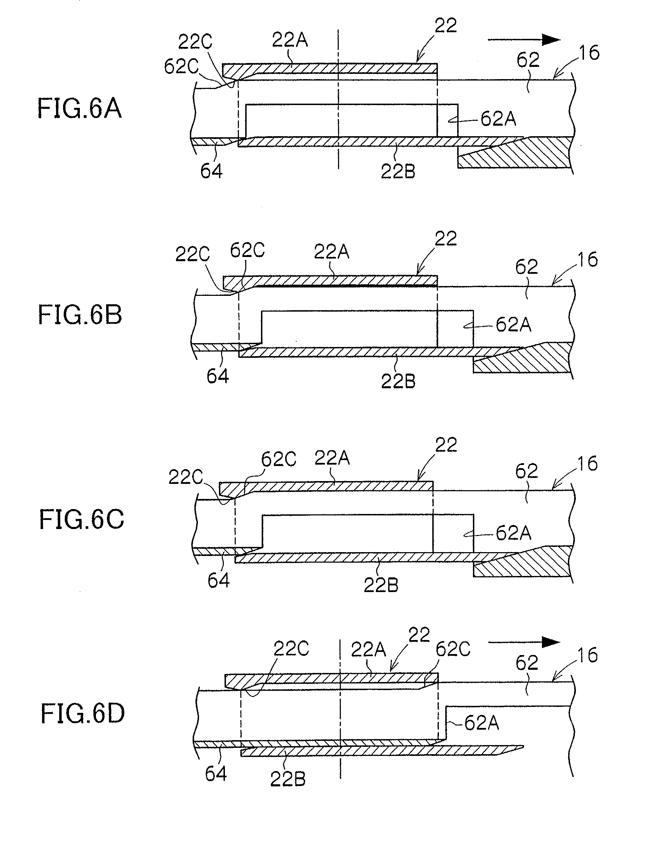

Further, in a predetermined location on the annular wall 62, i.e., substantially in the lower half of the portion which corresponds to the window 20B for recording and/or reproducing head when the opening 20 is opened, a cutout 62A which is cut out substantially in the shape of a rectangle, including the outer peripheral edge support portion 64, is formed. In the portion of the bottom of the inner rotor 16 that is overlapped with the second shutter member 18, a recess 62B for accommodating the plate thickness of the second shutter member 18 to a certain degree is formed. Further, in a predetermined location on the top surface of the annular wall 62 on the left side of the cutout 62A, a cam shoulder 62C which is engaged with the disk support 22 later described is formed (see Fig. 6A to Fig. 6D).

The second shutter member 18 has a boss 74 which has a hole 74A to be fitted to the circumference of the boss 44 on the left side, and is rotatable about the boss 44. In other words, the boss 44 serves as a pivot for the second shutter member 18. And, the end surface which is located opposite to and the farthest from the boss 74 of the second shutter member 18 provides an abutting portion 75 in the shape of an arc, when viewed from the top, that abuts the abutting portion 65 of the first shutter member 60.

In the second shutter member 18, a cutout 18A in the shape of an arc, when viewed from the top, that corresponds to the hub hole 20A is formed. Around the cutout 18A is protruded an inner peripheral edge support portion 76 in the shape of an arc, when viewed from the top, that constitutes an annular convex having a predetermined height, with the sides thereof being abutted to the sides of the inner peripheral edge support portion 66 of the first shutter member 60, when the opening 20 (the window 20B for recording and/or reproducing head) is closed. The top surfaces of these inner peripheral edge support portions 66, 76 abut the chucking area 12D to support the disk medium 12 from below together with the outer peripheral edge support portion 64, whereby dirt, dust, and the like are prevented from getting in onto the recording surface 12B.

In a predetermined location on the second shutter member 18, an elongate guide hole 78 formed in a substantially "<" shape, when viewed from the top, is provided. Into this guide hole 78, the engaging protrusion 68 protruded from the inner rotor 16 is inserted and engaged therewith, whereby the second shutter member 18 and the inner rotor 16 (the first shutter member 60) are allowed to be rotated in opposite directions, respectively, in synchronism with each other.

The engaging protrusion 68 penetrates through the guide hole 78 to be inserted into the recess 54, 55. In other words, the amount of the protruding height of the engaging protrusion 68 is greater than that of the thickness of the second shutter member 18 by the amount of the depth of the recess 54, 55 or so (there is no need to be identical). The first shutter member 60 and the second shutter member 18, and the inner peripheral wall 34 and the annular wall 62 form an accommodation area, which is a space for accommodating the disk medium 12.

Next, the disk support 22 will be described. The disk support 22 has a function of compensating for a missing part of the outer peripheral edge support portion 64 that is produced by forming the cutout 62A, and is disposed so as to close the cutout 62A when the opening 20 (the window 20B for recording and/or reproducing head) is closed. More specifically, the disk support 22 is formed in a substantially squared laterally-facing "U" shape in cross section so as to be able to accommodate the annular wall 62 in the inside thereof, and in the shape of an arc having the same curvature as that of the annular wall 62, when viewed from the top. And, in order to allow the disk support 22 to be vertically moved along the pair of guide pins 58, a pair of engaging grooves (not shown) with which the pair of guide pins 58 are engaged are formed in the end portions.

Further, as shown in Fig. 6A to Fig. 6D, to cause the disk support 22 to be vertically moved as the inner rotor 16 is rotated, a cam protrusion 22C which is engaged with the cam shoulder 62C is formed in the right end portion of the bottom surface of an upper wall 22A of the disk support 22. Therefore, when the opening 20 (the window 20B for recording and/or reproducing head) is closed, the cam shoulder 62C is supported by the top surface of the annular wall 62, and thus the disk support 22 is brought into the lifted position for closing the cutout 62A. In this way, the disk support 22 compensates for the missing part of the outer peripheral edge support portion 64, supporting the outer peripheral edge portion 12E of the disk medium 12 together with the outer peripheral edge support portion 64.

On the other hand, when the opening 20 (the window 20B for recording and/or reproducing head) is opened, the cam protrusion 22C is engaged with the cam shoulder 62C, and thus the disk support 22 is brought into the lowered position in order to allow the inner rotor 16 to be moved (rotated). In the left end portion of a lower wall 22B of the disk support 22, an upward tapered surface is formed, and in the end portion facing the left side edge portion of the cutout 62A of the outer peripheral edge support portion 64, a downward tapered surface is formed. Therefore, as the inner rotor 16 is rotated, the outer peripheral edge support portion 64 can be easily brought onto the lower wall 22B. Also, in the right end portion of the lower wall 22B, a downward tapered surface is formed such that it is faced to an upward tapered surface which is formed on the outer peripheral edge support portion 64.

Next, the disk holder 24, which is a critical portion of the present invention, will be described. This disk holder 24 is provided in the rear portion of the casing 14, being constituted by a pair of arms 82, 84 separated from each other by a predetermined spacing that are rotatably supported with respect to the casing 14, and a holding-down portion 80 which is bridge-connected to the tips of the arms 82, 84 such that it is symmetrical, and is formed substantially in the shape of a crescent, when viewed from the top, that is substantially along the geometry of the disk medium 12, such that it covers a part (the rear portion) of the non-recording surface 12A of the disk medium 12.

Since the holding-down portion 80 is symmetrically formed substantially in the shape of a crescent, when viewed from the top, the holding-down portion 80 keeps off the chucking area 12D on the non-recording surface 12A side of the disk medium 12, and will not interfere with the chucking member which is advanced from the disk opening 35 for holding the chucking area 12D. The rear end portion of the holding-down portion 80 between the arms 82, 84 is linearly cut out such that it will not interfere with the top plate 30 when the holding-down portion 80 is rotated to the removal position (the maximum rotating position) later described.

The holding-down portion 80 holds down the non-recording surface 12A of the disk medium 12 with its tip, however, both right and left end portions may be bent or molded thicker such that they hold down only the outer peripheral edge portion 12E of the disk medium 12. By using such a configuration, the possibility of the holding-down portion 80 (the disk holder 24) causing damage to the non-recording surface (printing surface) 12A is eliminated. In anyway, with this disk holder 24, the disk medium 12 is held such that it will not come off from the disk opening 35, or rattle in the accommodation area where it is in storage (see Fig. 7A).

In the respective rear portions of the pair of arms 82, 84, the cylindrical shaft 86 is protruded inward in the horizontal direction, and is rotatably held in the space formed between the shaft holder 56 of the lower shell 28 and the bearing 36 of the upper shell 26. Further, as shown in Fig. 4, from the inner surface (the bottom) of one (right side) arm 84 is protruded an retaining pin 88 for retaining a substantially annular hook 90B which is formed at the other end of the coil spring 90. The disk holder 24 is always urged toward the disk medium 12 by the coil spring 90 which is stretched between the retaining pins 38, 88 (is installed with a predetermined tension given).

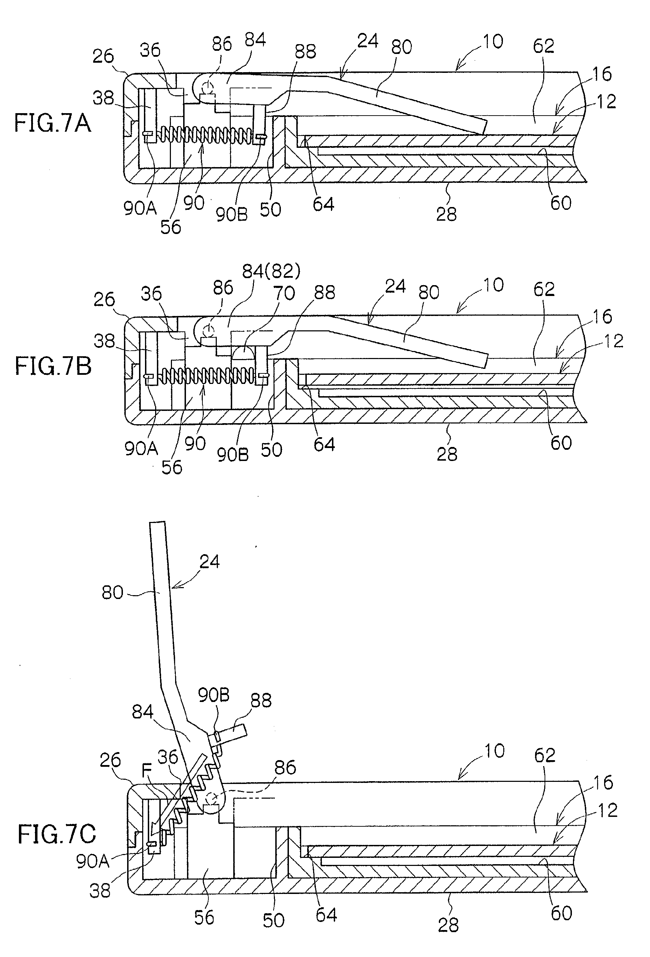

The inner surface of the other (left side) arm 82 is provided as a functional surface which is to be lifted, being engaged with (abutted against) the engaging convex 70 which is protruding from the top surface of the annular wall 62 of the inner rotor 16, and as shown in Fig. 7B, when the disk medium 12 is in operation (when rotated), the disk holder 24 is held in the slightly lifted position by the engaging convex 70 against the urging force of the coil spring 90 in order to allow the disk medium 12 to be rotated.

And further, when the disk medium 12 is to be taken out from the disk opening 35, the disk holder 24 is rotated rearward by hand to the removal position (the maximum rotating position), the urging force and the installation position of the coil spring 90 being defined such that the disk holder 24 is temporarily held in that position.

In other words, the protruding locations of the retaining pins 38, 88 are defined such that, when the disk holder 24 is rotated to the maximum rotating position (the removal position), where the outer surface (the top surface) of the other (left side) arm 82 abuts the rear side edge portion of the cutout 30A formed in the top plate 30, the coil spring 90 is brought into the cutout 30B, which is cut out more widely, resulting in the urging force being directed in the direction of the arrow F beyond the shaft 86, when viewed from the side, as shown in Fig. 7C.

Therefore, the disk holder 24 is capable of being temporarily held in the removal position (the maximum rotating position), thus the disk holder 24 is capable of being held in the three statuses (positions), i.e., the storing position for holding the disk medium 12, the operating position for allowing the disk medium 12 to be rotated, and the removal position for allowing the disk medium 12 to be taken out.

As shown in Fig. 7A and Fig. 7B, this disk holder 24 is configured such that it will not be protruded over the top surface of the casing 14 (the top plate 30), when viewed from the side, in the positions other than the removal position for taking out the disk medium 12 (especially in the operating position). Therefore, compared to the disk cartridge 10 with which the disk holder 24 is protruded over the top surface of the casing 14 (the top plate 30) especially in the operating position, the disk cartridge 10 according to the present embodiment allows the drive apparatus to be made still thinner. With the disk cartridge 10 according to the present embodiment, no problem is presented which cancels the advantage of making the disk cartridge 10 thinner.

When the upper shell 26 is placed on the lower shell for assembling the casing 14, the shaft 86 of the disk holder 24 is rotatably held by the bearing 36 and the shaft holder 56. In this way, after assembling the casing 14, the disk holder 24 is not capable of being separated from the casing 14. In other words, if the disk holder 24 is capable of being easily separated from the casing 14 even after assembling the casing 14, the user may accidentally lose the disk holder 24. However, the disk holder 24 according to the present embodiment is not capable of being separated from the casing 14, as long as the casing 14 is disassembled. Therefore, no troubles, such as the disk holder 24 being lost, will be caused.

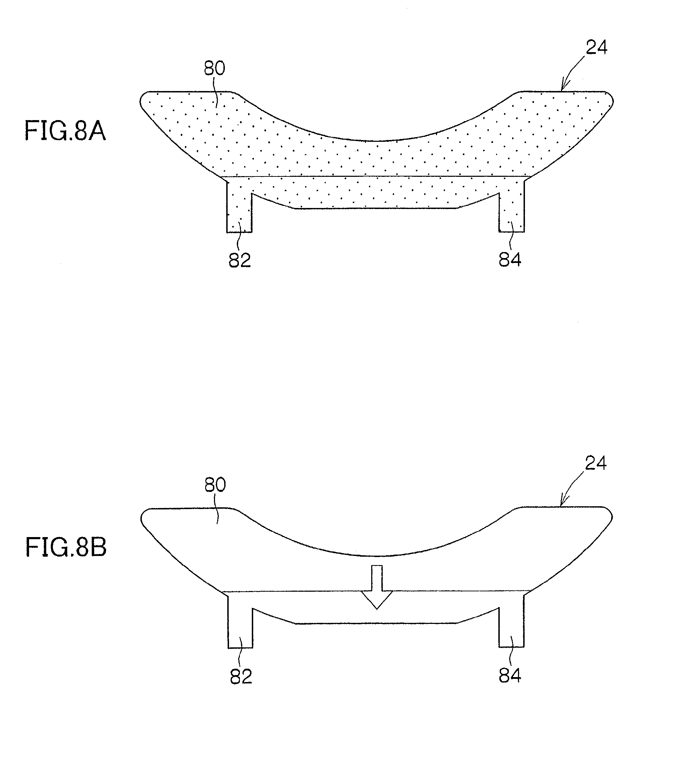

Further, at least on the top surface of the disk holder 24, a variety of identification mechanism may be given. For example, as shown in Fig. 8A, a pattern or the like for discrimination from the casing 14 may be formed, or as shown in Fig. 8B, an arrow or the like for indication of the direction of rotation may be formed as a mechanism to indicate the operating function of the disk holder 24. Further, the disk holder 24 may be formed in a color different from that of the casing 14. In any case, means which allows the user to easily identify the disk holder 24 may be adopted whatever it is.

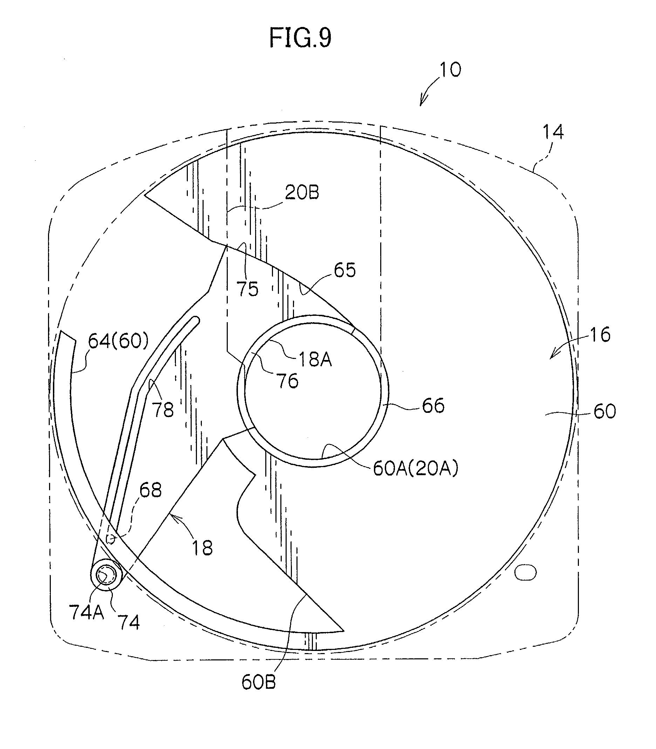

Next, the operation of the disk cartridge 10 as configured above will be described. As can be seen from Fig. 9, which illustrates the disk cartridge 10 excluding the upper shell 26 and the disk medium 12, when the disk cartridge 10 is not in use (when the disk medium 12 is in storage), the opening 20 (the window 20B for recording and/or reproducing head) is closed by the first shutter member 60 and the second shutter member 18.

In other words, the first shutter member 60 and the second shutter member 18 close the window 20B for recording and/or reproducing head by abutting their respective abutting portions 65, 75 against each other. The abutting portions 65, 75 may be formed, being provided with a tapered surface or a shouldered portion such that they can be overlapped one upon the other. This configuration allows dirt, dust, and the like to be positively prevented from getting in into the casing 14.

The inner peripheral edge support portions 66, 76 are annularly formed by their sides abutting each other. The engaging protrusion 68 protruded from the bottom surface of the inner rotor 16 penetrates through the rear end of the guide hole 78 in the second shutter member 18 to be inserted into the recess 54 of the lower shell 28. Further, as described above, the disk support 22 is held in the lifted position to close the cutout 62A (see Fig. 6A).

Therefore, the disk medium 12 is accommodated in the accommodation area, the chucking area 12D on the recording surface 12B side being supported by the inner peripheral edge support portions 66, 76, and the outer peripheral edge portion 12E on the recording surface 12B side being supported by the outer peripheral edge support portion 64. Thus the recording surface 12B is completely shut off from the outside. In other words, because this disk cartridge 10 is provided with the disk opening 35, dirt, dust, and the like can be deposited on the non-recording surface 12A of the disk medium 12, however, when not in use, the opening 20 (the window 20B for recording and/or reproducing head) is closed by the first shutter member 60 and the second shutter member 18, thus no dirt, dust, and the like will be deposited on the recording surface 12B.

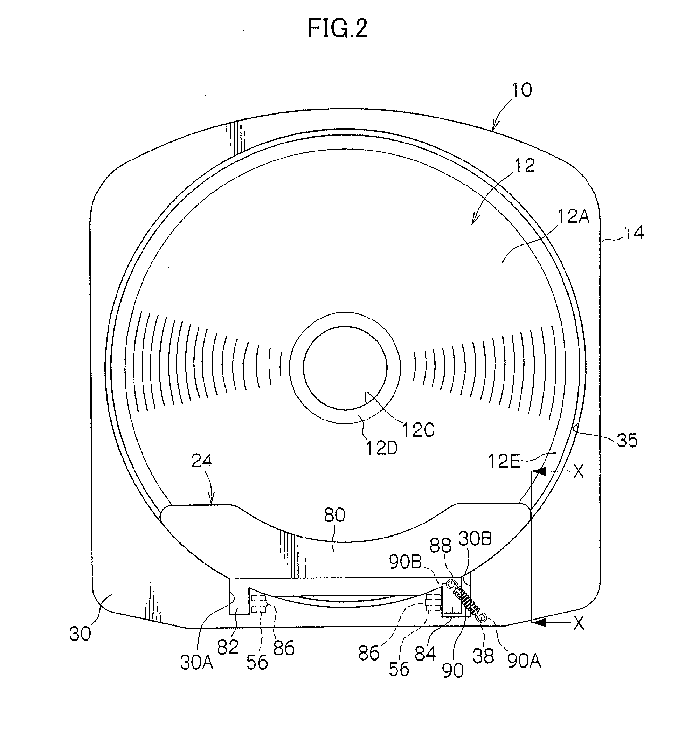

As can be seen from Fig. 2 and Fig. 7A, which illustrate the disk cartridge 10 including the upper shell 26 and the disk medium 12, when the disk cartridge 10 is not in use (when the disk medium 12 is in storage), the disk holder 24 holds down the non-recording surface 12A of the disk medium 12 by the urging force of the coil spring 90. Preferably, both right and left end portions of the holding-down portion 80 abut the outer peripheral edge portion 12E on the non-recording surface 12A side of the disk medium 12 for holding down the non-recording surface under pressure. Therefore, the disk medium 12 will not come off from the disk opening 35, or rattle in the accommodation area.

The non-recording surface 12A of the disk medium 12 is always exposed to the outside by the disk opening 35, thus the contents of the disk medium 12, or the like, printed on the non-recording surface 12A can be easily comprehended by the user. In addition, the contents printed on the non-recording surface 12A can enhance the graphical design function of the disk medium 12, which results in the graphical design function of the disk cartridge 10 being able to be enhanced.

Such a disk cartridge 10 is loaded to the drive apparatus for recording or reproducing. When the disk cartridge 10 is loaded in the loading opening in the drive apparatus, the first shutter member 60 (the inner rotor 16) and the second shutter member 18 are rotated in opposite directions, respectively, whereby the opening 20 (the window 20B for recording and/or reproducing head) is opened, and into the positioning holes 44A, 46A, the positioning pins (not shown) of the drive apparatus are inserted for positioning the disk cartridge 10 in the drive apparatus.

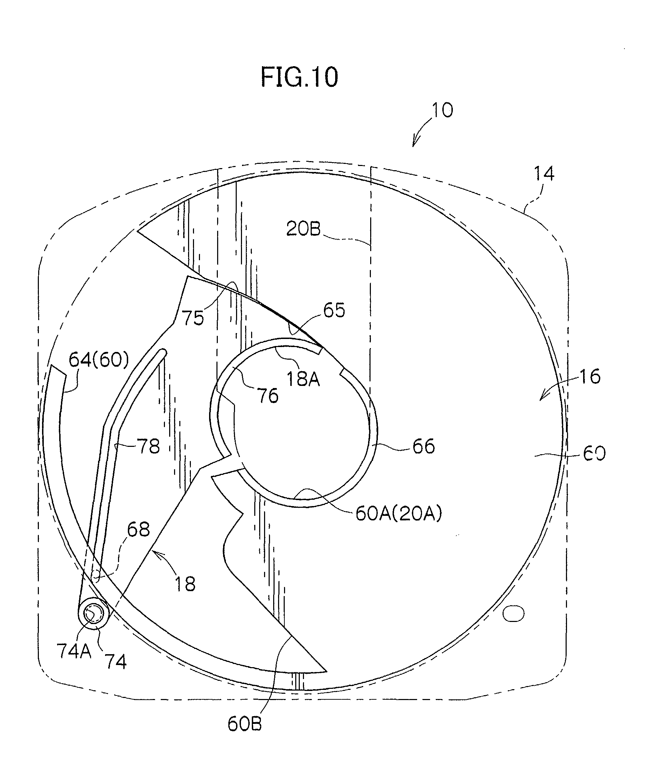

Then, the opening and closing member (not shown) of the drive apparatus is engaged with the operating protrusion 72 which is protruded from the front end of the shutter operating window 52, and moves the operating protrusion 72 toward the rear of the casing 14. Then, as shown in Fig. 10, the inner rotor starts rotating in a clockwise direction along the inner wall 50 around the hub hole 20A, the abutting portions 65, 75 and the sides of the inner peripheral edge support portions 66, 76 starting separating from each other. And, as shown in Fig. 6B, the cam protrusion 22C of the disc support 22 starts engaging with the cam shoulder 62C of the annular wall 62, and the disc support 22 being lowered along the guide pin 58. With the disc support 22 being lowered, the inner rotor 16 is completely allowed to be rotated.

At this time, the engaging protrusion 68 starts sliding in the guide hole 78, the second shutter member 18 starting rotating in a counterclockwise direction around the boss 44. Further, at this time, because the recess 54 has a gently sloped surface at least at the end where the engaging protrusion 68 is to slide out, the engaging protrusion 68 smoothly comes off from the inside of the recess 54 as the inner rotor 16 is rotated, then starting sliding on the bottom plate 40 of the lower shell 28.

Here, because the engaging protrusion 68 is formed higher than the plate thickness of the second shutter member 18, the inner rotor 16 is lifted by the engaging protrusion 68 to a predetermined level from the level of the second shutter member 18 and that of the bottom plate 40 of the lower shell 28 at least in the vicinity of the engaging protrusion 68. In other words, with the outer peripheral edge portion 12E on the recording surface 12B side being supported by the outer peripheral edge support portion 64, the chucking area 12D on the recording surface 12B side is separated from the inner peripheral edge support portion 76 of the second shutter member 18. In this way, the second shutter member 18 is allowed to be rotated in a counterclockwise direction without the inner peripheral edge support portion 76 contacting the recording surface 12B.

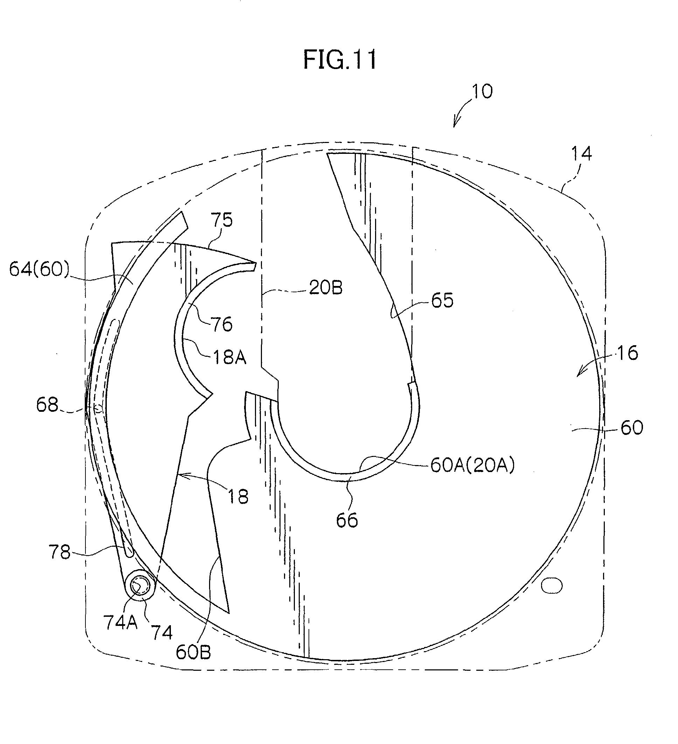

Thereafter, as shown in Fig. 11, the inner rotor 16 is further rotated in a clockwise direction, and therewith, the second shutter member 18 is rotated in a counterclockwise direction, whereby the window 20B for recording and/or reproducing head starts opening. And, when the engaging protrusion 68 reaches the midway where the guide hole 78 is folded, the second shutter member 18 stops being rotated in a counterclockwise direction. At this time, the right front end of the cutout 18A (the inner peripheral edge support portion 76), which is provided in the rightmost portion of the second shutter member 18, is positioned on the left side of the left end edge of the window 20B for recording and/or reproducing head.

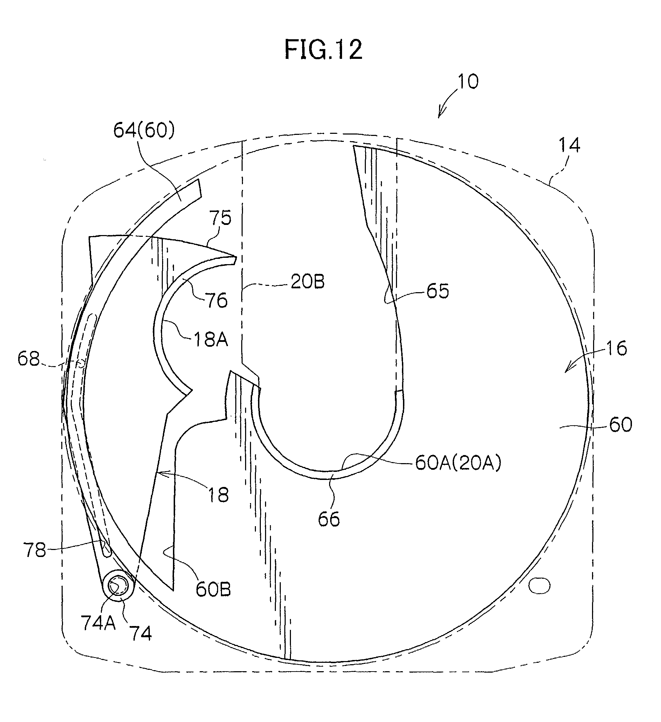

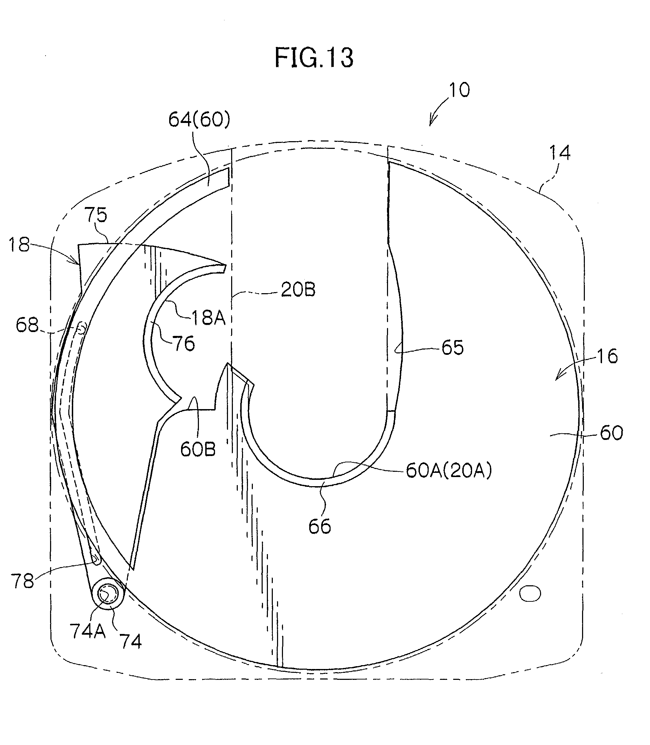

On the other hand, as shown in Fig. 12, even after the rotation of the second shutter member 18 being stopped, the inner rotor 16 is further rotated in a clockwise direction, and therewith, the engaging protrusion 68 slides in the guide hole 78. And, when the engaging protrusion 68 reaches the front end of the guide hole 78, the window 20B for recording and/or reproducing head is completely opened as shown in Fig. 13. At this time, the operating protrusion 72 is positioned at the rear end of the shutter operating window 52, the engaging protrusion 68 being inserted into the recess 55 of the lower shell 28. This recess 55 also has a gently sloped surface at least at the end where the engaging protrusion 68 is to slide in, thus the engaging protrusion 68 is smoothly inserted into the inside of the recess 55.

In this way, the inner rotor 16 is lowered onto the second shutter member 18 and onto the bottom plate 40 of the lower shell 28, but at this time, the center hole 12C and the chucking area 12D of the disk medium 12 have already been held (chucked) by the rotating spindle of the drive apparatus that was advanced from the hub hole 20A and the chucking member which was advanced from the disk opening 35, the disk medium 12 itself having been lifted to the rotation permissible position (the outer peripheral edge portion 12E on the recording surface 12B side having been separated from the outer peripheral edge support portion 64). Thus, the recording surface 12B will not contact with the inner peripheral edge support portion 76 of the second shutter member 18.

Further, at this time, the engaging convex 70 which is protruded from the top surface of the annular wall 62 of the inner rotor 16 has been engaged with (abutted against) the functional surface of the arm 82, and as shown in Fig. 7B, has lifted the arm 82 to a predetermined level against the urging force of the coil spring 90. In other words, by lifting the holding-down portion 80 of the disk holder 24 to a predetermined level, the tip (the right and left ends) of the holding-down portion 80 is separated from the non-recording surface 12A of the disk medium 12. Therefore, the disk holder 24 will not interfere with the disk medium 12. Yet, in this case, the disk holder 24 will not be protruded upward from the top surface of the top plate 30. Thus, the disk cartridge 10 according to the present embodiment is sufficiently adaptive to any drive apparatuses which are made thinner.

In addition, this disk holder 24 is symmetrically formed substantially in the shape of a crescent, when viewed from the top, (the central portion of the tip is cut out in a circular arc). Thus, the disk holder 24 will not interfere with the chucking member which is advanced from the disk opening 35 (from above). In other words, the problem that the disk holder 24 provides an obstacle to the chucking (holding) of the disk medium 12 will not occur. Further, because the engaging convex 70 is engaged with (abutted against) the arm 82 for which the coil spring 90 is not provided, the problem that the engaging convex 70 interferes with the coil spring 90 will also not occur.

In any case, the window 20B for recording and/or reproducing head (the opening 20) is thus opened, and the disk medium 12 which has been released from being held down (being held under pressure) by the disk holder 24 is rotated by the rotating spindle, while the recording and/or reproducing head of the drive apparatus that has been advanced from the window 20B for recording and/or reproducing head carries out recording of information onto the recording surface 12B, or reproducing the information recorded on the recording surface 12B.

On the other hand, when the disk cartridge 10 is to be removed from the drive apparatus, the positioning pins are first extracted from the positioning holes 44A, 46A, the disk cartridge 10 being released from the positioning in the drive apparatus. Then, by the discharging mechanism or the like (not shown) in the drive apparatus, the disk cartridge 10 starts moving in the direction in which it is discharged from the loading opening in the drive apparatus.

Then, the opening and closing member of the drive apparatus starts moving the operating protrusion 72 which is protruded from the rear end of the shutter operating window 52, toward the front side of the casing 14, the inner rotor 16 starting rotating in a counterclockwise direction in Fig. 9 through Fig. 13 along the inner wall 50 about the hub hole 20A. And, the engaging protrusion 68, which has been positioned at the front end of the guide hole 78 starts moving toward the rear side of the casing 14 along the guide hole 78, and comes off from the recess 55. In this case, because the recess 55 has a gently sloped surface at least at the end where the engaging protrusion 68 is to slide out, the engaging protrusion 68 smoothly comes off from the inside of the recess 55.

As the inner rotor 16 is rotated, the engaging convex 70 is disengaged from the arm 82. In this way, the holding-down portion 80 of the disk holder 24 again holds down the non-recording surface 12A of the disk medium 12 under pressure by the urging force of the coil spring 90.

Then, when the inner rotor 16 is rotated in a counterclockwise direction, and the engaging protrusion 68 passes the midway where the guide hole 78 is folded, the second shutter member 18 starts rotating in a clockwise direction. At this time, the holding (chucking) of the disk medium 12 by the rotating spindle and the chucking member has already been released. However, the engaging protrusion 68 has come off from the recess 55, and is sliding on the bottom plate 40, thus, the inner rotor 16 has been lifted to a predetermined level at least in the vicinity of the engaging protrusion 68. Therefore, the inner peripheral edge support portion 76 of the second shutter member 18 will not contact with the recording surface 12B.

Further, as the inner rotor 16 is rotated in a counterclockwise direction, and the second shutter member 18 is rotated in a clockwise direction, the window 20B for recording and/or reproducing head is closed, and therewith, the cam protrusion 22C starts engaging with the cam shoulder 62C, and the disc support 22 being lifted along the guide pin 58. As shown in Fig. 9, the abutting portion 65 abuts the abutting portion 75, the sides of the inner peripheral edge support portion 66 being abutted against the sides of the inner peripheral edge support portion 76, whereby the window 20B for recording and/or reproducing head is closed, and the cutout 62A is closed by the disk support 22.

In this case, the engaging protrusion 68 is smoothly inserted into the recess 54 with the sloped surface, the inner rotor 16 being lowered to a predetermined level, whereby the chucking area 12D is rested on the inner peripheral edge support portions 66, 76. In other words, the outer peripheral edge portion 12E on the recording surface 12B side of the disk medium 12 is supported by the outer peripheral edge support portion 64, and the chucking area 12D on the recording surface 12B side is supported by the inner peripheral edge support portions 66, 76. In this way, the recording surface 12B is again shut off from the outside, which results in dirt, dust, and the like from being deposited on the recording surface 12B, and the disk cartridge is discharged from the loading opening in the drive apparatus.

In the above paragraphs, the operation when the entire disk cartridge 10 including the disk medium 12 is loaded to the drive apparatus has been described. However, with some drive apparatuses, only the disk medium 12 is loaded. In this case, the disk medium 12 is taken out from the disk cartridge 10. In other words, the user rotates the disk holder 24 toward the rear side of the casing 14 for completely opening the disk opening 35.

When the disk holder 24 is rotated to the maximum rotating position where the outer surface (the top surface) of the arm 82 abuts the rear side edge portion of the cutout 30A, the disk holder 24 is temporarily held in the maximum rotating position. In other words, when the disk holder 24 is rotated to the maximum rotating position, the coil spring 90 which hook 90A is fitted to the retaining pin 38 and which hook 90B is fitted to the retaining pin 88 is brought into the cutout 30B, which is cut out more widely, as the disk holder 24 is rotated, resulting in the coil spring 90 being brought to beyond the shaft 86 from below to above, when viewed from the side, and thus the urging force being directed in the direction of the arrow F (see Fig. 7C).

Therefore, the disk holder 24 is now capable of being temporarily held in the maximum rotating position (the position where the disk medium 12 to be taken out), whereby the disk medium 12 is capable of being easily removed from the disk opening 35. In this case, the hooks 90A, 90B tend to slide toward the respective roots of the retaining pins 38, 88 when the disk holder 24 is rotated, thus they will not come off from the respective retaining pins 38, 88.

When the disk medium 12 is to be again accommodated into the casing 14, the disk medium 12 is inserted from the disk opening 35, and the disk holder 24 is rotated toward the front side of the casing 14, however, in this case, by lightly pushing the disk holder 24 toward the front side of the casing 14, the disk holder 24 can be easily rotated.

In other words, only by lightly pushing the disk holder 24, the coil spring 90 is easily brought to beyond the shaft 86 from above to below, and thus the urging force immediately acts in the direction for urging the disk holder 24 toward the disk medium 12. Therefore, the disk holder 24 is again capable of holding the disk medium 12 under pressure with ease, whereby the disk medium 12 is again prevented from coming off from the disk opening 35, or rattle in the accommodation area.

In any case, as described above, the disk holder 24 is configured such that it is capable of being held in the positions corresponding to the three different statuses, i.e., when the disk medium 12 is in storage (when it is not in use), when it is in use (when it is in operation), the disk cartridge 10 being loaded to the drive apparatus, when the disk medium 12 is taken out, and only the disk medium 12 is loaded to the drive apparatus (when it is taken out), thus in the respective statuses, the disk holder offers good handlability.

Because, when the disk medium 12 is not in use, the disk holder 24 holds down the non-recording surface 12A or the outer peripheral edge portion 12E of the disk medium 12 under pressure, there is no possibility of damage being caused to the non-recording surface 12A. Further, when the disk medium 12 is in use, the disk holder 24 is separated from the disk medium 12 such that the disk medium 12 can be rotated, but the disk holder 24 will not be protruded over the top surface of the top plate 30, when viewed from the side. Therefore, drive apparatuses can be made still thinner.

In the present embodiment, it is assumed that the recording surface 12B is formed only on one side of the disk medium 12. However, even for the disk medium with which the recording surface is provided on both sides, the present embodiment is applicable, provided that the portion which is held down by the disk holder 24 is limited to the outer peripheral edge portion 12E of the disk medium 12. In addition, the disk medium 12 may be, for example, a disk medium which is specialized for reproduction, allowing no pieces of information to be recorded by the user.

Next, a disk cartridge 210 according to a second embodiment of the present invention will be described. Any components having the same configuration, function, or effect as the above-described first embodiment will be provided with the same reference sign, and the description thereof will be omitted.

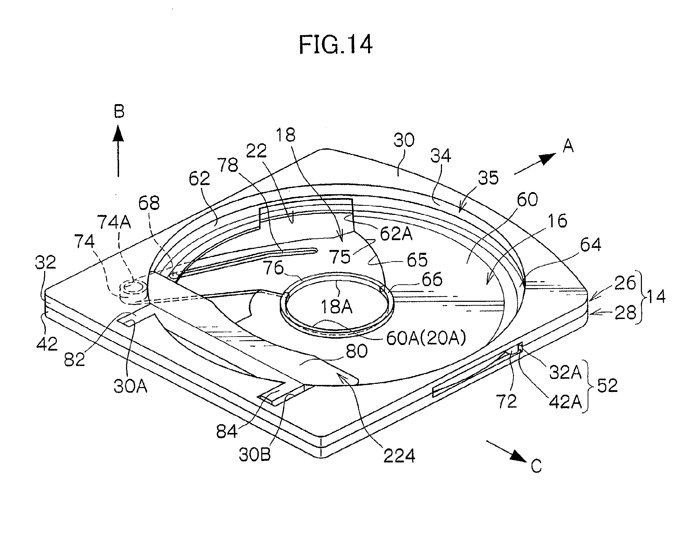

As shown in Fig. 14 to Fig. 16, the disk cartridge 210 according to the second embodiment is mainly structured by having a disk medium 12 as an information recording/reproducing medium formed in the shape of a disk, a casing 14 for accommodating the disk medium 12, an inner rotor 16 having a first shutter member 60 which is capable of opening and closing an opening 20 provided in the bottom of the casing 14 (a window 20B for recording and/or reproducing head) for accessing the disk medium 12 and a second shutter member 18, a disk support 22 which is vertically moved in synchronism with the turning of the inner rotor 16, and a disk holder 224 which holds the disk medium 12 such that, when the disk medium 12 is held, it will not drop out from a disk opening 35 provided in the top surface of the casing 14.

The above-mentioned respective members excluding the disk medium 12 are formed mainly of synthetic resin. Also, a lock member which, when the disk cartridge 210 is not in use (when the disk medium 12 is in storage), prevents the inner rotor from being rotated in order to maintain the closed state of the opening 20 (the window 20B for recording and/or reproducing head) is provided, but the illustration and description thereof are omitted.

The disk holder 224 according to the second embodiment that is formed of plastic resin is provided in the rear portion of the casing 14, being constituted by a pair of arms 82, 84 separated from each other by a predetermined spacing that are rotatably supported with respect to the casing 14, and a holding-down portion 80 which is bridge-connected to the tips of the arms 82, 84 such that it is symmetrical, and is formed substantially in the shape of a crescent, when viewed from the top, that is substantially along the geometry of the disk medium 12, such that the hold-down portion covers a part (the rear portion) of the non-recording surface 12A of the disk medium 12.

Since the holding-down portion 80 is symmetrically formed substantially in the shape of a crescent, when viewed from the top, it keeps off the chucking area 12D on the non-recording surface 12A side of the disk medium 12, and will not interfere with the chucking member which is advanced from the disk opening 35 for holding the chucking area 12D. The rear end portion of the holding-down portion 80 between the arms 82, 84 is linearly cut out such that will not interfere with the top plate 30 when the holding-down portion 80 is rotated to the removal position (the maximum rotating position) later described.

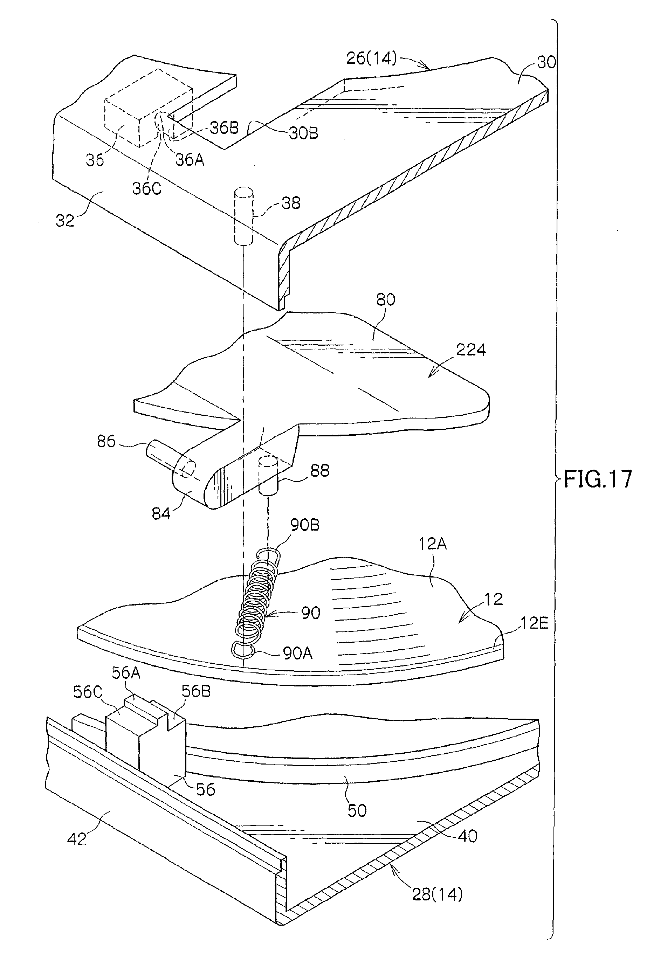

The holding-down portion 80 holds down the non-recording surface 12A of the disk medium 12 with its tip, however, both right and left end portions may be configured such that they hold down only the outer peripheral edge portion 12E of the disk medium 12. By using such a configuration, the possibility of the holding-down portion 80 (the disk holder 224) causing damage to the non-recording surface (printing surface) 12A is eliminated. In any case, with this disk holder 224, the disk medium 12 is held such that it will not come off from the disk opening 35, or rattle in the accommodation area when it is in storage (see Fig. 17A).

In the respective rear portions of the pair of arms 82, 84, the cylindrical shaft 86 is protruded inward in the horizontal direction, and is rotatably held in the space formed between the shaft holder 56 of the lower shell 28 and the bearing 36 of the upper shell 26. Further, as shown in Fig. 17, from the inner surface (the bottom) of one (right side) arm 84 is protruded an retaining pin 88 for retaining a substantially annular hook 90B which is formed at the other end of the coil spring 90. The disk holder 224 is always urged toward the disk medium 12 by the coil spring 90 which is stretched between the retaining pins 38, 88 (is installed with a predetermined tension given).

The inner surface of the other (left side) arm 82 is provided as a functional surface which is to be lifted, being engaged with (abutted against) the engaging convex 70 which is protruded from the top surface of the annular wall 62 of the inner rotor 16, and as shown in Fig. 18B, when the disk medium 12 is in operation (when it is rotated), the disk holder 224 is held in the slightly lifted position by the engaging convex 70 against the urging force of the coil spring 90 in order to allow the disk medium 12 to be rotated.

Further, when the disk medium 12 is to be taken out from the disk opening 35, the disk holder 224 is rotated rearward by hand to the removal position (the maximum rotating position), the urging force and the installation position of the coil spring 90 being defined such that the disk holder 224 is temporarily held in that position.

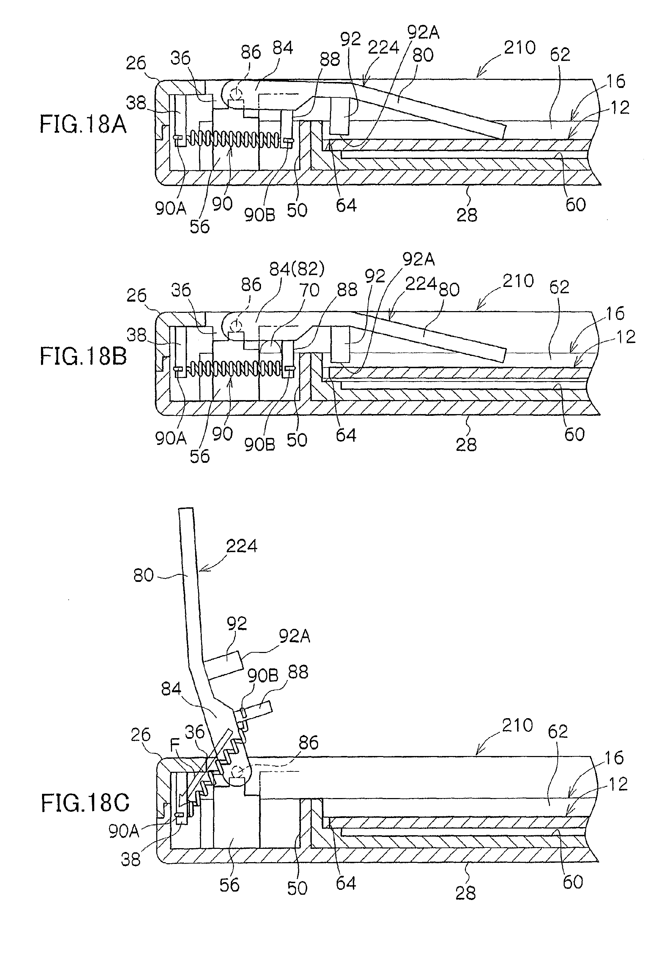

In other words, the protruding locations of the retaining pins 38, 88 are defined such that, when the disk holder 224 is rotated to the maximum rotating position (the removal position), where the outer surface (the top surface) of the other (left side) arm 82 abuts the rear side edge portion of the cutout 30A formed in the top plate 30, the coil spring 90 is brought into the cutout 30B, which is cut out more widely, resulting in the urging force being directed in the direction of arrow F beyond the shaft 86, when viewed from the side, as shown in Fig. 18C.

Therefore, the disk holder 224 is capable of being temporarily held in the removal position (the maximum rotating position). Thus the disk holder 224 is capable of being held in the three statuses (positions), i.e., the storing position for holding the disk medium 12, the operating position for allowing the disk medium 12 to be rotated, and the removal position for allowing the disk medium 12 to be taken out.

As shown in Fig. 18A and Fig. 18B, this disk holder 224 is configured such that it will not be protruded over the top surface of the casing 14 (the top plate 30), when viewed from the side, in the positions other than the removal position for taking out the disk medium 12 (especially in the operating position). Therefore, compared to the disk cartridge 210 with which the disk holder 224 is protruded over the top surface of the casing 14 (the top plate 30) especially in the operating position, the disk cartridge 210 according to the present embodiment allows the drive apparatus to be made still thinner.

From the inner surface (the bottom surface) of the disk holder 224 in the vicinity of the connecting portions between both right and left arms 82, 84 and the holding-down portion 80 and in the portions corresponding to the outer peripheral edge portion 12E of the disk medium 12 are protruded columnar supporting ribs 92 which support the disk holder 224 such that, when the rear portion of the casing 14 with the disk holder 224 is held (when the disk holder 224 is utilized as the holding portion), the disk holder 224 is not deflected.

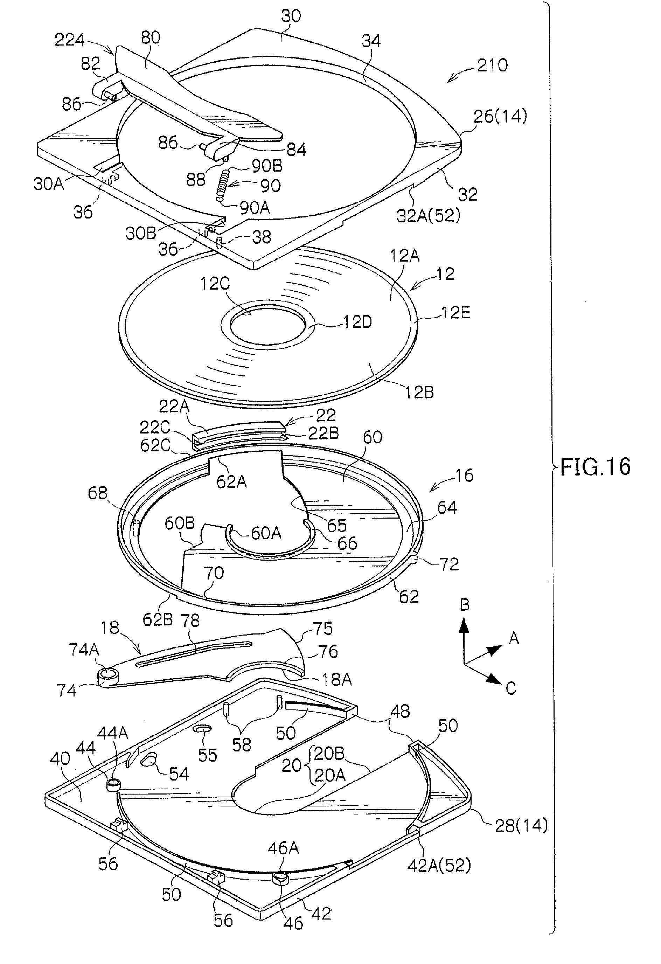

In other words, this supporting ribs 92 are formed in such a length that, when the disk cartridge 210 is not in use (when the disk medium 12 is in storage), and when the rear portion of the casing 14 with the disk holder 224, is not held, the tips 92A are slightly (0.5 mm to 1.0 mm or so) separated from the outer peripheral edge portion 12E on the non-recording surface 12A of the disk medium 12. And, as shown in Fig. 16, only when the rear portion of the casing 14 with the disk holder 224 is held, the supporting ribs 92 abut the outer peripheral edge portion 12E of the disk medium 12 in order to prevent the disk holder 224 from being deflected.

Thus, if the disk holder 224 is provided in the rear portion of the casing 14, and from the inner surface (the bottom) of the disk holder 224, supporting ribs 92 are protruded, the disk holder 224 is capable of being utilized conveniently as a holding portion for holding the disk cartridge 210 when the disk cartridge 210 is to be loaded to the drive apparatus, which is preferable. Because this supporting rib 92 is formed in the shape of a column, a sufficient rigidity can be secured. Therefore, the deflection deformation of the disk holder 224 is capable of being adequately suppressed. The geometry of the supporting rib 92 may be any geometry which can assure a certain degree of rigidity, including prisms, such as a quadrangular prism and a hexagonal prism, a cylinder, and an elliptic cylinder.

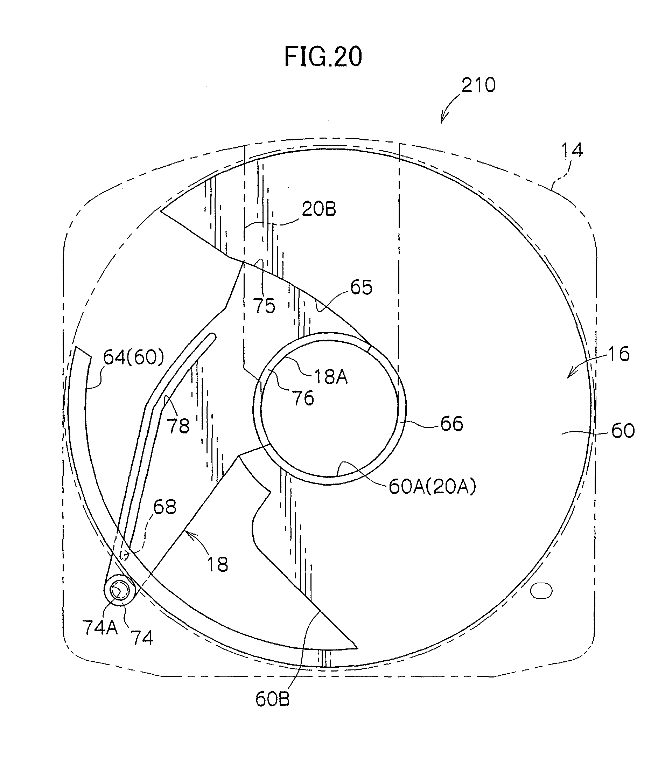

Next, the function of the disk cartridge 210 as configured above will be described. As can be seen from Fig. 20, which illustrates the disk cartridge 210 excluding the upper shell 26 and the disk medium 12, when the disk cartridge 210 is not in use (when the disk medium 12 is in storage), the opening 20 (the window 20B for recording and/or reproducing head) is closed by the first shutter member 60 and the second shutter member 18.

In other words, the first shutter member 60 and the second shutter member 18 close the window 20B for recording and/or reproducing head by abutting their respective abutting portions 65, 75 against each other. The abutting portions 65, 75 may be formed, being provided with a tapered surface or a shouldered portion such that they can be overlapped one upon the other. This configuration allows dirt, dust, and the like to be positively prevented from getting in into the casing 14.

At this time, the inner peripheral edge support portions 66, 76 are annularly formed by their sides abutting each other. The engaging protrusion 68 protruded from the bottom of the inner rotor 16 penetrates through the rear end of the guide hole 78 in the second shutter member 18 to be inserted into the recess 54 of the lower shell 28. Further, as described above, the disk support 22 is held in the lifted position to close the cutout 62A.

Therefore, the disk medium 12 is accommodated in the accommodation area, the chucking area 12D on the recording surface 12B side being supported by the inner peripheral edge support portions 66, 76, and the outer peripheral edge portion 12E on the recording surface 12B side being supported by the outer peripheral edge support portion 64, thus the recording surface 12B is completely shut off from the outside. In other words, since the disk cartridge 210 is provided with the disk opening 35, dirt, dust, and the like can be deposited on the non-recording surface 12A of the disk medium 12. However, when not in use, the opening 20 (the window 20B for recording and/or reproducing head) is closed by the first shutter member 60 and the second shutter member 18, thus no dirt, dust, and the like will be deposited on the recording surface 12B.

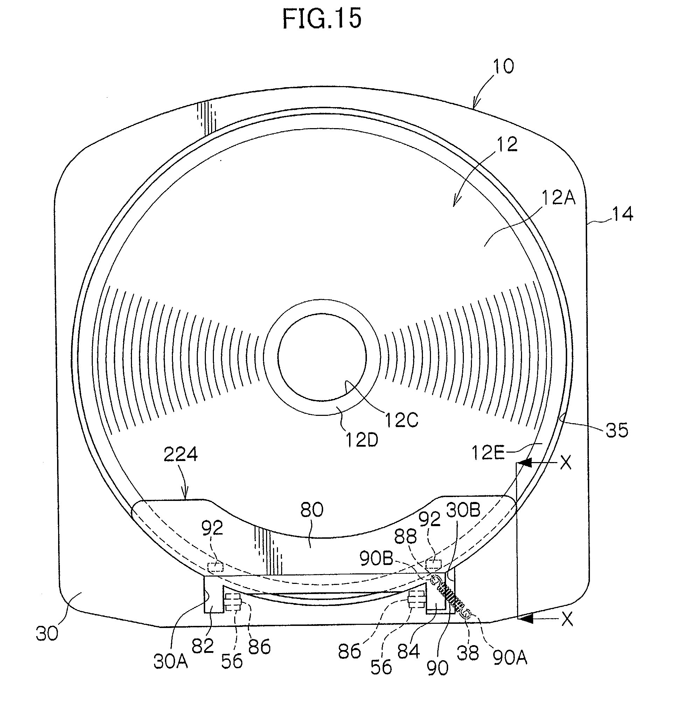

As can be seen from Fig. 15 and Fig. 18A, which illustrate the disk cartridge 210 including the upper shell 26 and the disk medium 12, when the disk cartridge 210 is not in use (when the disk medium 12 is in storage), the disk holder 224 holds down the non-recording surface 12A of the disk medium 12 by the urging force of the coil spring 90. Preferably, both right and left end portions of the holding-down portion 80 hold down the outer peripheral edge portion 12E on the non-recording surface 12A side of the disk medium 12 under pressure. Therefore, the disk medium 12 will not come off from the disk opening 35, or rattle in the accommodation area.

The non-recording surface 12A of the disk medium 12 is always exposed to the outside by the disk opening 35, thus the contents of the disk medium 12, or the like, printed on the non-recording surface 12A can be easily comprehended by the user. In addition, the contents printed on the non-recording surface 12A can enhance the graphical design function of the disk medium 12, which results in the graphical design function of the disk cartridge 10 being able to be enhanced.

When such a disk cartridge 210 is loaded to the drive apparatus for recording or reproducing, almost any user would hold the rear portion of the casing 14. In other words, almost any user would hold the rear portion of the casing 14 with the disk holder 224 for loading disk cartridge 210 into the opening of the drive apparatus.

In that case, even if the pressing force due to the holding deflects the disk holder 224, the supporting ribs 92, which are protruded from the inner surface of the disk holder 224, abut the outer peripheral edge portion 12E of the disk medium 12, preventing the disk holder 224 from being deformed. Therefore, no operational uneasiness is given to the user. In addition, the supporting ribs 92 abut the outer peripheral edge portion 12E of the disk medium 12. Therefore, the problem that the printing surface (the non-recording surface 12A) of the disk medium 12 is damaged will not occur.

And, when the disk cartridge 210 is loaded in the loading opening in the drive apparatus, the first shutter member 60 (the inner rotor 16) and the second shutter member 18 are rotated in opposite directions, respectively, whereby the opening 20 (the window 20B for recording and/or reproducing head) is opened, and into the positioning holes 44A, 46A, the positioning pins (not shown) are inserted for positioning the disk cartridge 210 in the drive apparatus.

As described above, with the disk cartridge 210 according to the second embodiment, if the rear portion of the casing 14, including the disk holder 224 is held when the disk cartridge 210 is not in use, the deflection deformation of the disk holder 224 is capable of being adequately suppressed, because the supporting ribs 92 as protrusions which abut the outer peripheral edge portion 12E of the disk medium 12 when the disk holder 224 is deflected are protruded from the inner surface (the bottom) of the disk holder 224 in the vicinity of the connecting portions between both right and left arms 82, 84 and the holding-down portion 80. Therefore, no operational uneasiness is given to the user. In addition, the disk holder 224 is capable of holding down the disk medium 12 by both right and left end portions of the holding-down portion 80 and the supporting ribs 92, i.e., at four points in total, which allows positive holding, and thus the disk medium 12 will not rattle in the accommodation area.

In the present embodiment, it is assumed that the recording surface 12B is formed only on one side of the disk medium 12. However, even for disk media with which the recording surface is provided on both sides, the present embodiment is applicable, provided that the portion which is held down by the disk holder 224 is limited to the outer peripheral edge portion 12E of the disk medium 12. In addition, the disk medium 12 may be, for example, a disk medium which is specialized for reproduction, allowing no pieces of information to be recorded by the user.

Next, a disk cartridge 310 according to a third embodiment of the present invention will be described. Any components having the same configuration, function, or effect as the above-described first embodiment and second embodiment will be provided with the same reference sign, and the description thereof will be omitted.

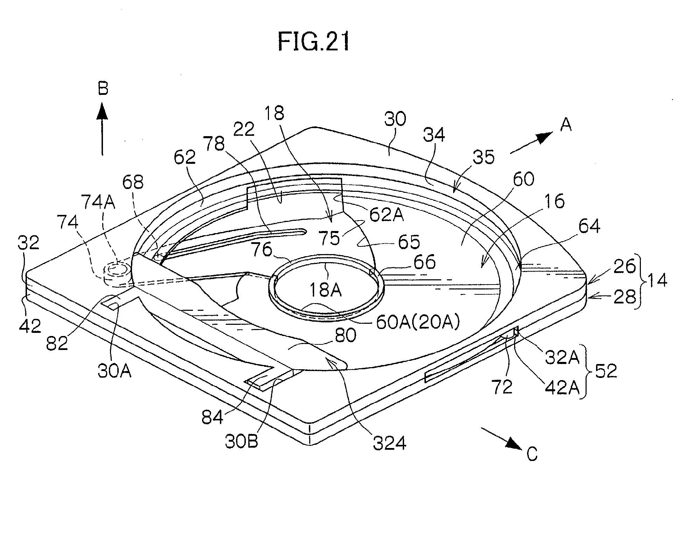

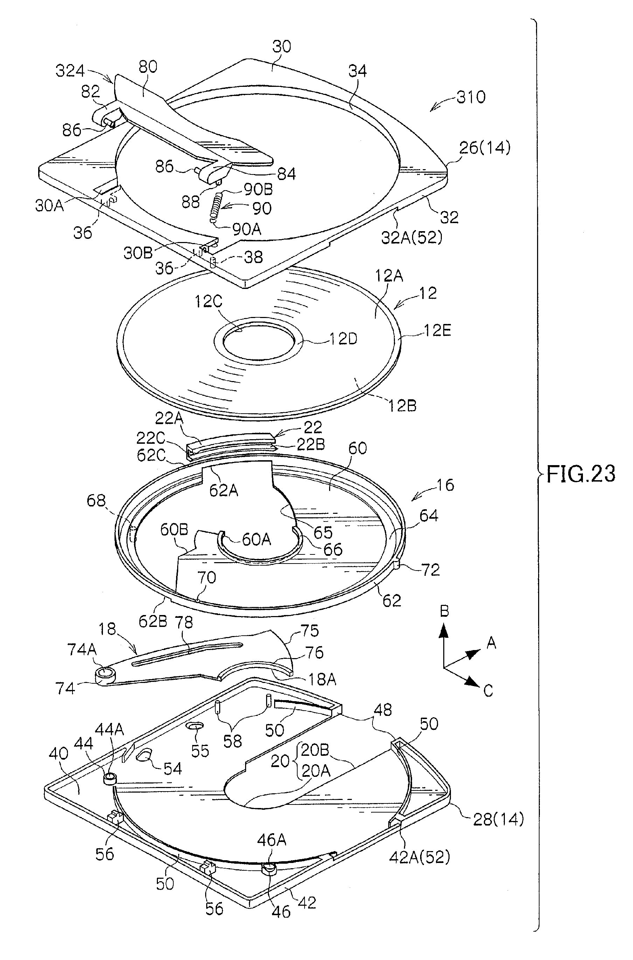

As shown in Fig. 21 to Fig. 23, the disk cartridge 310 according to the third embodiment is mainly structured by having a disk medium 12 as an information recording/reproducing medium formed in the shape of a disk, a casing 14 for accommodating the disk medium 12, an inner rotor 16 having a first shutter member 60 which is capable of opening and closing an opening 20 provided in the bottom of the casing 14 (a window 20B for recording and/or reproducing head) for accessing the disk medium 12 and a second shutter member 18, a disk support 22 which is vertically moved in synchronism with the turning of the inner rotor 16, and a disk holder 324 which holds the disk medium 12 such that, when the disk medium 12 is held, it will not drop out from a disk opening 35 provided in the top surface of the casing 14.

The above-mentioned respective members excluding the disk medium 12 are formed mainly of synthetic resin. Also, a lock member which, when the disk cartridge 310 is not in use (when the disk medium 12 is in storage), prevents the inner rotor from being rotated in order to maintain the closed state of the opening 20 (the window 20B for recording and/or reproducing head) is provided, but the illustration and description thereof are omitted.

The disk holder 324 according to the third embodiment is provided in the rear portion of the casing 14, being constituted by a pair of arms 82, 84 separated from each other by a predetermined spacing that are rotatably supported with respect to the casing 14, and a holding-down portion 80 which is bridge-connected to the tips of the arms 82, 84 such that it is symmetrical, and is formed substantially in the shape of a crescent, when viewed from the top, that is substantially along the geometry of the disk medium 12, such that the holding-down portion covers a part (the rear portion) of the non-recording surface 12A of the disk medium 12.

Since the holding-down portion 80 is symmetrically formed substantially in the shape of a crescent, when viewed from the top, it keeps off the chucking area 12D on the non-recording surface 12A side of the disk medium 12, and will not interfere with the chucking member which is advanced from the disk opening 35 for holding the chucking area 12D. The rear end portion of the holding-down portion 80 between the arms 82, 84 is linearly cut out such that it will not interfere with the top plate 30 when the holding-down portion 80 is rotated to the removal position (the maximum rotating position) later described.

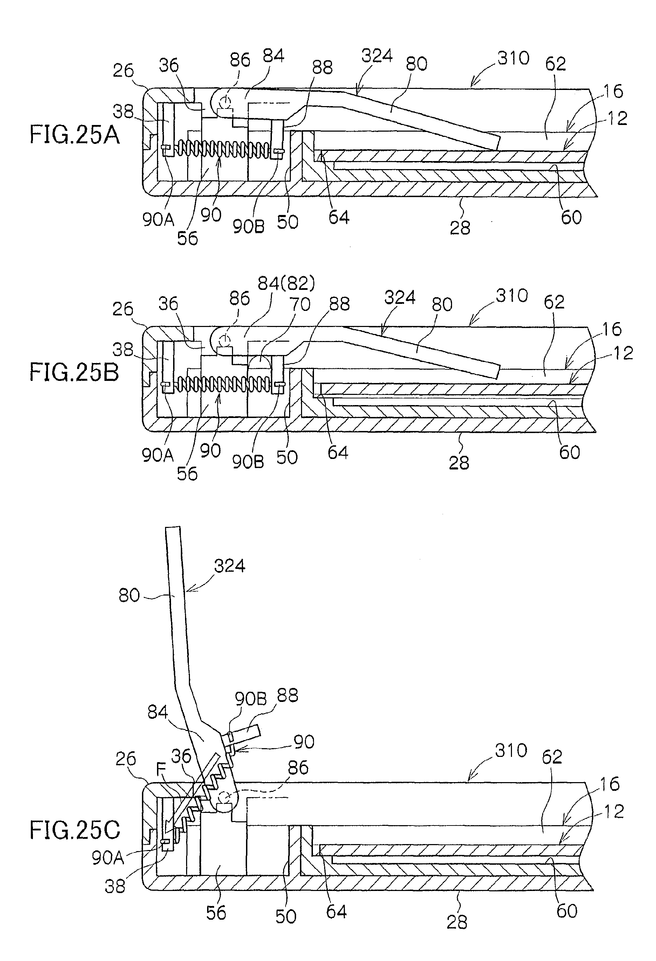

The holding-down portion 80 holds down the non-recording surface 12A of the disk medium 12 with its tip. However, both right and left end portions may be configured such that they hold down only the outer peripheral edge portion 12E of the disk medium 12. By using such a configuration, the possibility of the holding-down portion 80 (the disk holder 324) causing damage to the non-recording surface (printing surface) 12A is eliminated. In any case, with this disk holder 324, the disk medium 12 is held such that it will not come off from the disk opening 35, or rattle in the accommodation area when the disk medium is in storage (see Fig. 25A).

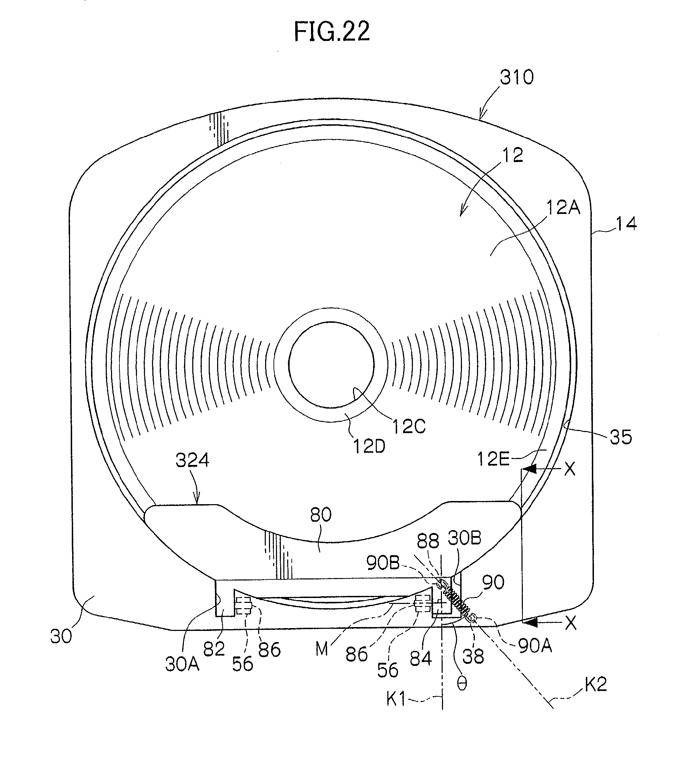

In the respective rear portions of the pair of arms 82, 84, the cylindrical shaft 86 is protruded inward in the horizontal direction, and is rotatably held in the space formed between the shaft holder 56 of the lower shell 28 and the bearing 36 of the upper shell 26. The shaft center line M (see Fig. 22) of this shaft 86 is equivalent to the "rotation axis" in the present embodiment.

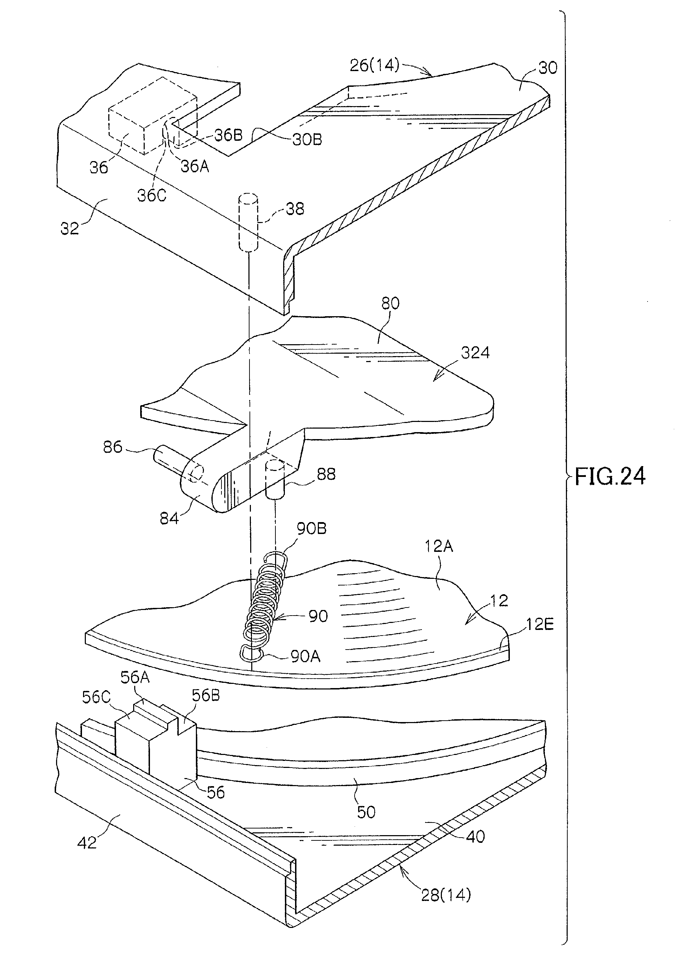

As shown in Fig. 24, from the inner surface (the bottom) of one (right side) arm 84 is protruded an retaining pin 88 as a first retaining protrusion for retaining a substantially annular hook 90B which is formed at the other end of the coil spring 90, and the disk holder 324 is always urged toward the disk medium 12 by the coil spring 90 which is stretched between the retaining pin 38 as a second retaining protrusion and the retaining pin 88 (is installed with a predetermined tension given).

The inner surface of the other (left side) arm 82 is provided as a functional surface which is to be lifted, being engaged with (butted against) the engaging convex 70 which is protruded from the top surface of the annular wall 62 of the inner rotor 16, and as shown in Fig. 25B, when the disk medium 12 is in operation (when it is rotated), the disk holder 324 is held in the slightly lifted position by the engaging convex 70 against the urging force of the coil spring 90 in order to allow the disk medium 12 to be rotated.

Further, when the disk medium 12 is to be taken out from the disk opening 35, the disk holder 324 is rotated rearward by hand to the removal position (the maximum rotating position), the urging force and the installation position of the coil spring 90 being defined such that the disk holder 324 is temporarily held in that position.

In other words, the protruding locations of the retaining pins 38, 88 are defined such that, when the disk holder 324 is rotated to the maximum rotating position (the removal position), where the outer surface (the top surface) of the other (left side) arm 82 abuts the rear side edge portion of the cutout 30A formed in the top plate 30, the coil spring 90 is brought into the cutout 30B, which is cut out more widely, resulting in the urging force being brought to beyond the shaft 86 (the rotation axis) from below to above, when viewed from the side, and thus being directed in the direction of arrow F, as shown in Fig. 25C.

More particularly, as shown in Fig. 22, the retaining pin 88 is protruded at the front side than the shaft center line M (the rotation axis) of the shaft 86, and the retaining pin 38 is protruded at the rear side of the shaft center line M (the rotation axis) of the shaft 86, and in a predetermined location except that on the imaginary line K1 which passes through the retaining pin 88 and is orthogonal to the shaft center line M (the rotation axis) of the shaft 86, preferably, in such a predetermined location that the angle θ formed between the imaginary line K1 and the imaginary line K2 connecting from the retaining pin 38 to the retaining pin 88 is 0° < θ ≤ 45°.

Therefore, the disk holder 324 is capable of being temporarily held in the removal position (the maximum rotating position). Thus the disk holder 324 is capable of being held in the three statuses (positions), i.e., the storing position for holding the disk medium 12, the operating position for allowing the disk medium 12 to be rotated, and the removal position (the maximum rotating position) for allowing the disk medium 12 to be taken out. The cutout 30B, which is cut out more widely, provides an "accommodating portion" in the embodiment of the present invention, whereby even the disk holder 324 with which the coil spring 90 is stretched between it and the casing 14 (the upper shell 26) is capable of being freely and easily rotated.

With the coil spring 90, the stress imposed per unit length can be reduced, as compared to the torsional spring, and thus a longer service life and an increased reliability can be obtained. Therefore, the operability of the disk holder 324 can be improved. In other words, even if the disk holder 324 is rotated to the removal position (the maximum rotating position), the coil spring 90 can create a spring force in the direction of stretch and that of torsion, thus, the disk holder 324 can be stably and freely rotated with a minimum of effort. Thus, the disposition location of the retaining pin 38 can be determined with a degree of freedom.

In addition, the coil spring 90 can be mounted only by fitting the hooks 90A, 90B formed at both ends thereof to the retaining pins 38, 88 protruded from the bottom surface of the arm 84 (the inner surface of the upper shell 26), which provides an advantage of easy mounting. Yet, when the disk holder 324 is rotated, the hooks 90A, 90B tend to slide toward the respective roots of the retaining pins 38, 88, thus they will not come off from the respective retaining pins 38, 88.

Further, the respective retaining pins 38, 88 are protruded such that, in the storing position where the disk holder 324 holds the disk medium 12, they are in parallel with each other, and the lengths thereof are defined (are extended) such that the coil spring 90 is positioned under the shaft 86 (the rotation axis) when viewed from the side. And, in this case, a predetermined tension (the initial tension) has been applied to the coil spring 90. Therefore, also in this case, the hooks 90A, 90B will not come off from the respective retaining pins 38, 88, the disk holder 324 being adequately urged toward the disk medium 12.

In any case, if the hooks 90A, 90B are slidable with respect to the retaining pins 38, 88, respectively, (at least the hook 90B is slidable with respect to the retaining pin 88), causing the coil spring 90 to be under the shaft 86 (the rotation axis), when viewed from the side, in the storing position, and causing the coil spring to be above the shaft 86 (the rotation axis) in the removal position can be easily and positively realized. Thus, the hooks 90A, 90B of the coil spring 90 will not come off from the respective retaining pins 38, 88, however, a mechanism for preventing the hooks 90A, 90B from coming off from the respective retaining pins 38, 88 may, of course, be further provided.

As shown in Fig. 25A and Fig. 25B, this disk holder 324 is configured such that it will not be protruded over the top surface of the casing 14 (the top plate 30), when viewed from the side, in the positions other than the removal position for taking out the disk medium 12 (especially in the operating position). Therefore, compared to the disk cartridge 310 with which the disk holder 324 is protruded over the top surface of the casing 14 (the top plate 30) especially in the operating position, the disk cartridge 310 according to the present embodiment allows the drive apparatus to be made still thinner.

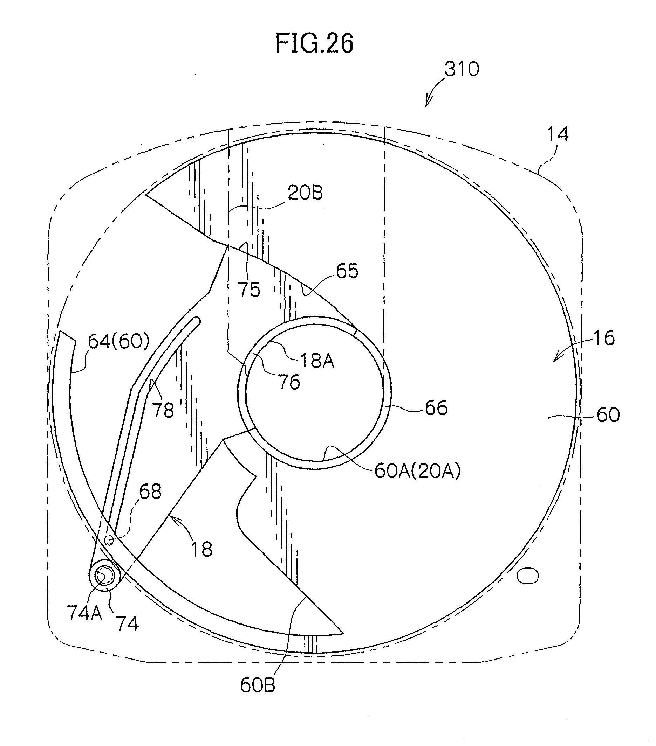

Next, the operation of the disk cartridge 310 as configured above will be described. As can be seen from Fig. 26, which illustrates the disk cartridge 310 excluding the upper shell 26 and the disk medium 12, when the disk cartridge 310 is not in use (when the disk medium 12 is in storage), the opening 20 (the window 20B for recording and/or reproducing head) is closed by the first shutter member 60 and the second shutter member 18.

In other words, the first shutter member 60 and the second shutter member 18 close the window 20B for recording and/or reproducing head by abutting their respective abutting portions 65, 75 against each other. The abutting portions 65, 75 is preferably formed, being provided with a tapered surface or a shouldered portion such that they can be overlapped one upon the other, because, with this configuration, dirt, dust, and the like can be positively prevented from getting in into the casing 14.

At this time, the inner peripheral edge support portions 66, 76 are annularly formed by their sides abutting each other. The engaging protrusion 68 protruded from the bottom surface of the inner rotor 16 penetrates through the rear end of the guide hole 78 in the second shutter member 18 to be inserted into the recess 54 of the lower shell 28. Further, the disk support 22 is held in the lifted position to close the cutout 62A.

Therefore, the disk medium 12 is accommodated in the accommodation area, the chucking area 12D on the recording surface 12B side being supported by the inner peripheral edge support portions 66, 76, and the outer peripheral edge portion 12E on the recording surface 12B side being supported by the outer peripheral edge support portion 64, thus the recording surface 12B is completely shut off from the outside. In other words, because this disk cartridge 310 is provided with the disk opening 35, dirt, dust, and the like can be deposited on the non-recording surface 12A of the disk medium 12. However, when not in use, the opening 20 (the window 20B for recording and/or reproducing head) is closed by the first shutter member 60 and the second shutter member 18, thus no dirt, dust, and the like will be deposited on the recording surface 12B.

As can be seen from Fig. 22 and Fig. 25A, which illustrate the disk cartridge 310 including the upper shell 26 and the disk medium 12, when the disk cartridge 310 is not in use (when the disk medium 12 is in storage), the disk holder 324 holds down the non-recording surface 12A of the disk medium 12 by the urging force of the coil spring 90 which is positioned under the shaft 86 (the rotation axis) when viewed from the side (preferably, both right and left end portions of the holding-down portion 80 hold down the outer peripheral edge portion 12E on the non-recording surface 12A side of the disk medium 12 under pressure). Therefore, the disk medium 12 will not come off from the disk opening 35, or rattle in the accommodation area.

The non-recording surface 12A of the disk medium 12 is always exposed to the outside by the disk opening 35, thus the contents of the disk medium 12, or the like, printed on the non-recording surface 12A can easily be comprehended by the user. In addition, the contents printed on the non-recording surface 12A can enhance the graphical design function of the disk medium 12, which results in the graphical design function of the disk cartridge 10 being able to be enhanced.

When the disk holder 324 is rotated to the maximum rotating position, where the outer surface (the top surface) of the arm 82 abuts the rear side edge portion of the cutout 30A, the disk holder is temporarily held in the maximum rotating position. In other words, when the disk holder 324 is rotated to the maximum rotating position, the coil spring 90 which hook 90A is fitted to the retaining pin 38 and which hook 90B is fitted to the retaining pin 88 is brought into the cutout 30B, which is cut out more widely, as the disk holder 324 is rotated, resulting in the coil spring 90 being brought to beyond the shaft 86 (the rotation axis) from below to above (being positioned above the shaft 86 (the rotation axis)), when viewed from the side, and thus the urging force being directed in the direction of arrow F (see Fig. 25C).

Therefore, the disk holder 324 is now capable of being temporarily held in the maximum rotating position (the position where the disk medium 12 to be taken out), whereby the disk medium 12 is capable of being easily taken out from the disk opening 35. In this case, the hooks 90A, 90B tend to move (slide) toward the respective roots of the retaining pins 38, 88 when the disk holder 324 is rotated, thus they will not come off from the respective retaining pins 38, 88. In addition, because the cutout 30B is cut out more widely, and thus the coil spring 90 is allowed to be moved, even the disk holder 324 with which the coil spring 90 is stretched between it and the casing 14 (the upper shell 26) is capable of being freely and easily rotated.

When the disk medium 12 is to be again accommodated into the casing 14, the disk medium 12 is inserted from the disk opening 35, and the disk holder 324 is rotated toward the front side of the casing 14. However, in this case, by lightly pushing the disk holder 324 toward the front side of the casing 14, the disk holder 24 can be easily rotated.

In other words, only by lightly pushing the disk holder 324, the coil spring 90 is easily brought to beyond the shaft 86 (the rotation axis) from above to below, and thus the urging force immediately acts in the direction for urging the disk holder 324 toward the disk medium 12. Therefore, the disk holder 324 is again capable of holding the disk medium 12 under pressure with ease, whereby the disk medium 12 is again prevented from coming off from the disk opening 35, or rattle in the accommodation area.

In any case, as described above, the disk holder 324 is capable of reliably holding the disk medium 12 with respect to the casing 14 when the disk cartridge 310 is not in use, and thus the disk medium 12 will not rattle in the accommodation area. Further, when the disk cartridge 310 is in use, the disk holder 324 is separated from the disk medium 12 such that the disk medium 12 can be rotated, but with the coil spring 90, the stress imposed per unit length can be reduced, as compared to the torsional spring, and thus a longer service life and an increased reliability can be obtained.

Further, when the disk medium 12 is to be taken out from the disk cartridge 310, the disk holder 324 is rotated rearward. However, even if the disk holder 324 is rotated to the maximum rotating position where the disk medium 12 can be taken out, the coil spring 90 can create a spring force in the direction of stretch and that of torsion. Thus, the disk holder 324 can be stably and freely rotated with a minimum of effort.

Yet, in the upper shell 26 (the top plate 30) of the casing 14, the cutout 30B as an accommodating portion which accommodates the coil spring 90 when the disk holder 324 is rotated, and the protruding locations of the retaining pins 38, 88 are defined as described above. Thus even the disk holder 324 with which the coil spring 90 is stretched between it and the casing 14 (the upper shell 26) is capable of being easily rotated, and temporarily held in the maximum rotating position. Therefore, the disk medium 12 is capable of being easily taken out from the disk opening 35, and the operability of the disk holder 324 can be improved.

In the present embodiment, it is assumed that the recording surface 12B is formed only on one side of the disk medium 12. However, even for disk media with which the recording surface is provided on both sides, the present embodiment is applicable, provided that the portion which is held down by the disk holder 324 is limited to the outer peripheral edge portion 12E of the disk medium 12. In addition, the disk medium 12 may be, for example, a disk medium which is specialized for reproduction, allowing no pieces of information to be recorded by the user.

Next, a disk cartridge 410 according to a fourth embodiment of the present invention will be described. Any components having the same configuration, function, or effect as the above-described first embodiment to third embodiment will be provided with the same reference sign, and the description thereof will be omitted.

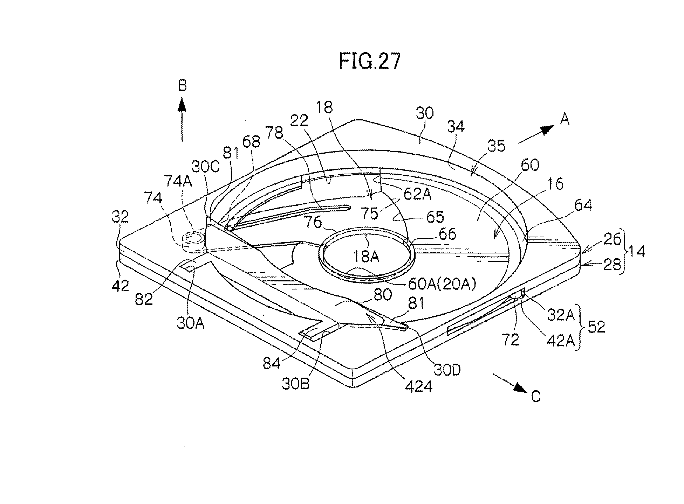

As shown in Fig. 27 to Fig. 29, the disk cartridge 410 according to the fourth embodiment is mainly structured by having a disk medium 12 as an information recording/reproducing medium formed in the shape of a disk, a casing 14 for accommodating the disk medium 12, an inner rotor 16 having a first shutter member 60 which is capable of opening and closing an opening 20 provided in the bottom of the casing 14 (a window 20B for recording and/or reproducing head) for accessing the disk medium 12 and a second shutter member 18, a disk support 22 which is vertically moved in synchronism with the turning of the inner rotor 16, and a disk holder 424 which holds the disk medium 12 such that, when the disk medium 12 is held, it will not drop out from a disk opening 35 provided in the top surface of the casing 14.

The above-mentioned respective members excluding the disk medium 12 are formed mainly of synthetic resin. Also, a lock member which, when the disk cartridge 410 is not in use (when the disk medium 12 is in storage), prevents the inner rotor from being rotated in order to maintain the closed state of the opening 20 (the window 20B for recording and/or reproducing head) is provided, but the illustration and description thereof are omitted.

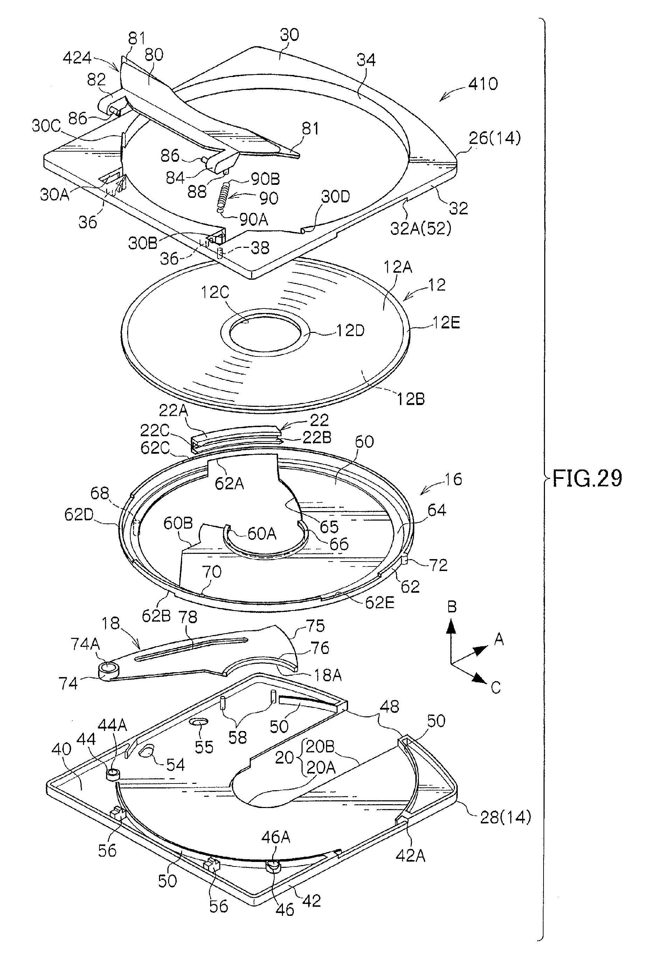

As shown in Fig. 29, the casing 14 is configured in the shape of a substantially rectangular flat container, an upper shell 26 and a lower shell 28 each formed of synthetic resin being joined together. More particularly, when viewed from the top, the front edge of the casing 14 is formed in a substantially symmetric arc and both rear end corners are formed in an obliquely cut shape. This geometry prevents misloading of the drive cartridge 410 to the drive apparatus.

The upper shell 26 includes a top plate 30 having a shape corresponding to that of the casing 14, when viewed from the top, and an outer peripheral wall 32 which is erected downward substantially along the outer peripheral edge portion of the top plate 30. In the top plate 30, the disk opening 35 is provided as a circular hole having a diameter slightly larger than the outside diameter of the disk medium 12 (i.e., a size so large that the disk medium 12 will not be contacted, even when rotated). In the inner peripheral edge portion of the disk opening 35, an inner peripheral wall 34 having a predetermined height is erected downward.

Inside of this inner peripheral wall 34, the disk medium 12 is rotatably accommodated. The disk opening 35 allows the disk medium 12 to be inserted into the casing 14, and to be taken out from the casing 14. Because the top plate 30 of the upper shell 26 is provided with the disk opening 35, no upward bulging portion is formed. Therefore, as is the case with the first embodiment to the third embodiment, the casing 14 has an advantage that it can be constructed thinner than the casing of an encapsulated type cartridge with which no disk opening 35 is formed.

In the right wall in the outer peripheral wall 32, a substantially rectangular cutout 32A is formed. This cutout 32A, which is opposed to a cutout 42A in the lower shell 28 described later, constitutes a shutter operating window 52 through which an operating protrusion 72 of the inner rotor 16 described later is protruded. Further, in the rear portion of the top plate (including the inner peripheral wall 34), a cutout 30A, 30B for accommodating an arm 82, 84 of the disk holder 424 later described is formed.

From the inside surface of the top plate 30 at the rear side and at the right side of the one (right side) cutout 30B is protruded an retaining pin 38 for retaining a substantially annular hook 90A formed at one end of a coil spring 90 as an urging mechanism later described. The cutout 30B is cut out more widely than the cutout 30A on the retaining pin 38 side in order to allow the coil spring 90 to be moved when the disk holder 424 later described is rotated to the position where the disk medium 12 is to be taken out.

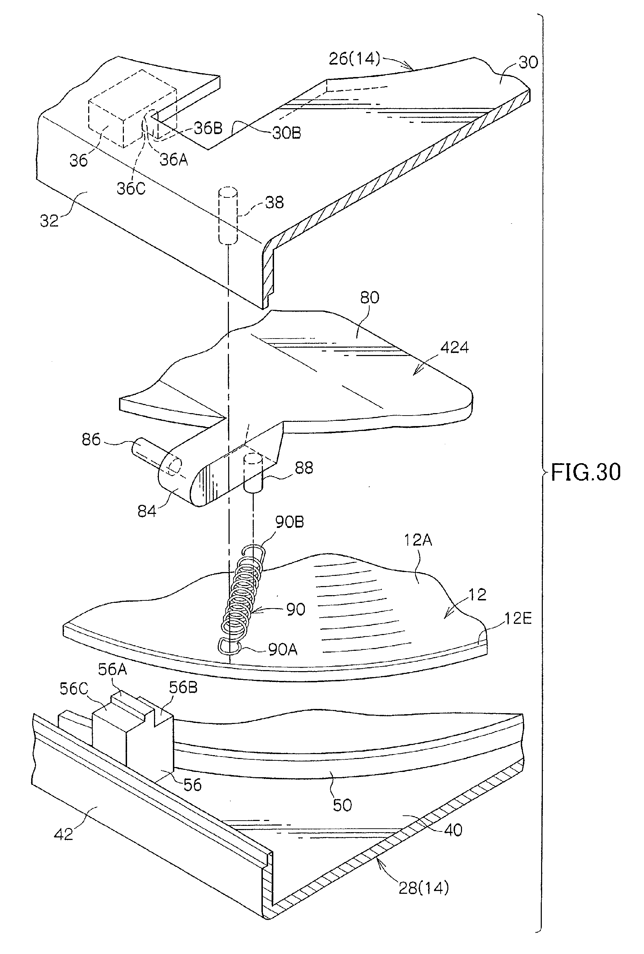

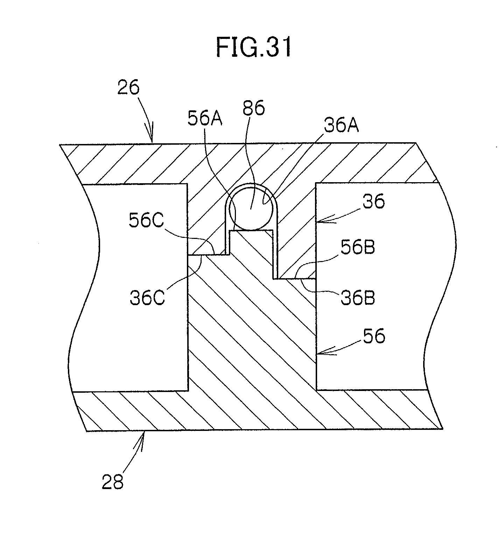

As shown in Fig. 30, from the inside surface of the rear of the top plate 30 between the cutouts 30A, 30B, bearings 36 are protruded, being separated from each other by a predetermined spacing, for rotatably holding shafts 86 protruded from the arms 82, 84, being paired with shaft holders 56 protruded from the lower shell 28, in order to prevent dislocation of the shafts 86. As shown in Fig. 31, the respective bearings 36 have a groove 36A which is formed substantially in the shape of the letter "U" when viewed from the side. The groove 36A is formed such that the heights of a front wall 36B and a rear wall 36C constituting the groove 36A are different from each other, the front wall 36B being higher than the rear wall 36C, for example.

In a predetermined location of the inner peripheral edge portion of the disk opening 35 on the front side of the cutouts 30A, 30B in the top plate 30 (including the inner peripheral wall 34), cutouts 30C, 30D substantially in the shape of a wedge, when viewed from the top, which accommodate position-restricting portions 81 of the disk holder 424 later described are formed.

On the other hand, the lower shell 28 includes a bottom plate 40 having a shape substantially corresponding to the top plate 30 and an outer peripheral wall 42 having a shape substantially corresponding to the outer peripheral wall 32. The bottom plate 40 is provided with an opening 20. The opening 20 is constituted by the hub hole 20A which is substantially circular, having a diameter larger than the outside diameter of the center hole 12C in the disk medium 12, and slightly smaller than the outside diameter of the chucking area 12D (the inside diameter of the recording surface 12B), and the window 20B for recording and/or reproducing head that is substantially rectangular, being connected to the hub hole 20A ahead of the diameter line drawn in the right and left direction of the hub hole 20A, and is formed substantially in the shape of the letter "U" when viewed from the top, being opened toward the front side as a whole. The geometry of the hub hole 20A and the window 20B for recording and/or reproducing head is not limited to this, and they may be provided independently of each other.

The inner rotor 16 has the first shutter member 60 which faces the recording surface 12B of the disk medium 12 with a predetermined clearance being given, the annular wall 62 which allows the disk medium 12 to be accommodated inside, and an outer peripheral edge support portion 64 which is formed between the first shutter member 60 and the annular wall 62, being bulged upward for supporting the outer peripheral edge portion 12E on the recording surface 12B side of the disk medium 12 from below. When the casing 14 is assembled, the annular wall 62 is rotatably disposed inside the inner wall 50 of the lower shell 28, and outside the inner peripheral wall 34 of the upper shell 26, and the annular wall 62 is covered by the upper shell 26 (the top plate 30 and the inner peripheral wall 34).

In the central portion of the inner rotor 16, a cutout 60A in the shape of an arc, when viewed from the top, that corresponds to the hub hole 20A, and substantially in the left half of the inner rotor 16, a cutout 60B for accommodating the second shutter member 18 is formed. The cutout 60A is connected to the cutout 60B, and the right end edge of the cutout 60B that is continued from the cutout 60A is formed in the shape of an arc, when viewed from the top, that is displaced to the outside of the right end edge of the window 20B for recording and/or reproducing head, when the opening 20 (the window 20B for recording and/or reproducing head) is opened, and is formed as an abutting portion 65 against which the second shutter member 18 is abutted.

Around the cutout 60A is protruded an inner peripheral edge support portion 66, in the shape of an arc, for supporting the chucking area 12D of the disk medium 12 from below. In a predetermined location on the bottom of the outer peripheral edge support portion 64 (the inner rotor 16) on the cutout 60B side is protruded an engaging protrusion 68 for moving the second shutter member 18 in synchronism with the rotation of the inner rotor 16 (the first shutter member 60). In a predetermined location on the top surface of the annular wall 62, an engaging convex 70 for lifting the disk holder 24 to a predetermined level is protruded. In a predetermined location on the outer peripheral surface of the annular wall 62, the operating protrusion 72 which is protruded through the shutter operating window 52 is provided in the radial direction.

Further, in a predetermined location on the annular wall 62, i.e., substantially in the lower half of the portion which corresponds to the window 20B for recording and/or reproducing head when the opening 20 is opened, a cutout 62A which is cut out substantially in the shape of a rectangle, including the outer peripheral edge support portion 64, is formed. In the portion of the bottom of the inner rotor 16 that is overlapped with the second shutter member 18, a recess 62B for accommodating the plate thickness of the second shutter member 18 to a certain degree is formed. Further, in a predetermined location on the top surface of the annular wall 62 on the left side of the cutout 62A, a cam shoulder 62C which is engaged with the disk support 22 later described is formed. In addition, a predetermined location in the top surface of the annular wall 62, the cutouts 62D, 62E for accommodating the position-restricting portions 81 of the disk holder 424 when the inner rotor 16 is rotated are formed.

The second shutter member 18 has a boss 74 which has a hole 74A to be fitted to the circumference of the boss 44 on the left side, being capable of rotating about the boss 44. In other words, the boss 44 serves as a pivot for the second shutter member 18. And, the end surface which is located opposite to and the farthest from the boss 74 of the second shutter member 18 provides an abutting portion 75 in the shape of an arc, when viewed from the top, that abuts the abutting portion 65 of the first shutter member 60.

In the second shutter member 18, a cutout 18A in the shape of an arc, when viewed from the top, that corresponds to the hub hole 20A is formed. Around the cutout 18A is protruded an inner peripheral edge support portion 76 in the shape of an arc, when viewed from the top, that constitutes an annular convex having a predetermined height, with the sides thereof abutted against the sides of the inner peripheral edge support portion 66 of the first shutter member 60, when the opening 20 (the window 20B for recording and/or reproducing head) is closed. The top surfaces of these inner peripheral edge support portions 66, 76 abut the chucking area 12D to support the disk medium 12 from below together with the outer peripheral edge support portion 64, whereby dirt, dust, and the like are prevented from getting in onto the recording surface 12B.

In a predetermined location on the second shutter member 18, an elongate guide hole 78 formed in a substantially "<" shape, when viewed from the top, is provided. Into this guide hole 78, the engaging protrusion 68 protruded from the inner rotor 16 is inserted and engaged therewith, whereby the second shutter member 18 and the inner rotor 16 (the first shutter member 60) are allowed to be rotated in opposite directions, respectively, in synchronism with each other.

The engaging protrusion 68 penetrates through the guide hole 78 to be inserted into the recess 54, 55. In other words, the amount of the protruding height of the engaging protrusion 68 is greater than that of the thickness of the second shutter member 18 by the amount of the depth of the recess 54, 55 or so (there is no need to be identical). The first shutter member 60 and the second shutter member 18, and the inner peripheral wall 34 form an accommodation area, which is a space for accommodating the disk medium 12.

Next, the disk holder 424 according to the fourth embodiment will be described. This disk holder 424 is provided in the rear portion of the casing 14, being constituted by a pair of arms 82, 84 separated from each other by a predetermined spacing that are rotatably supported with respect to the casing 14. A holding-down portion 80 which is bridge-connected to the tips of the arms 82, 84 such that it is symmetrical, and is formed substantially in the shape of a crescent, when viewed from the top, that is substantially along the geometry of the disk medium 12, such that the holding-down portion covers a part (the rear portion) of the non-recording surface 12A of the disk medium 12, and the position-restricting portions 81 which are integrally attached to both right and left tips of the holding-down portion 80.

Because the holding-down portion 80 is symmetrically formed substantially in the shape of a crescent, when viewed from the top, it keeps off the chucking area 12D on the non-recording surface 12A side of the disk medium 12, and will not interfere with the chucking member which is advanced from the disk opening 35 for holding the chucking area 12D. The rear end portion of the holding-down portion 80 between the arms 82, 84 is linearly cut out such that it will not interfere with the top plate 30 when the holding-down portion 80 is rotated to the removal position (the maximum rotating position) later described.

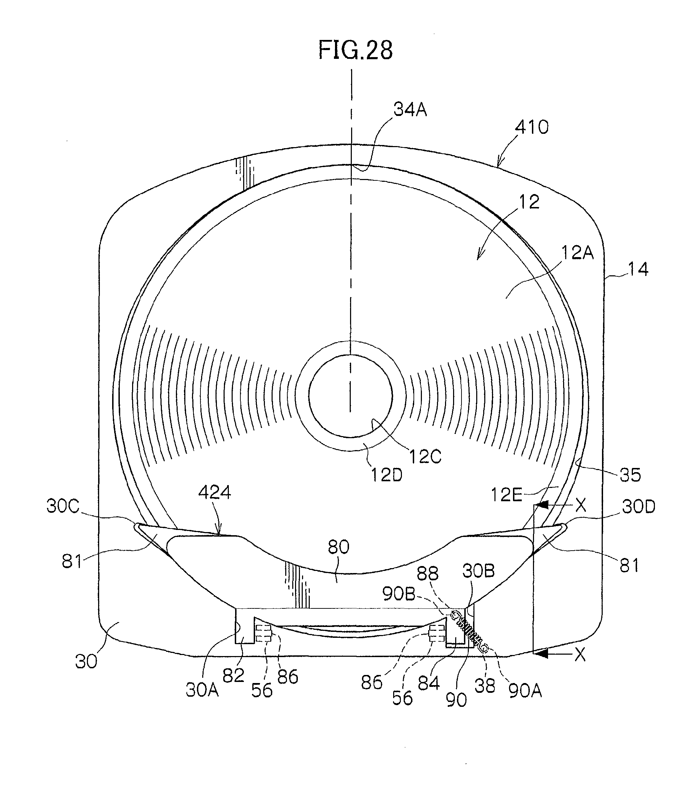

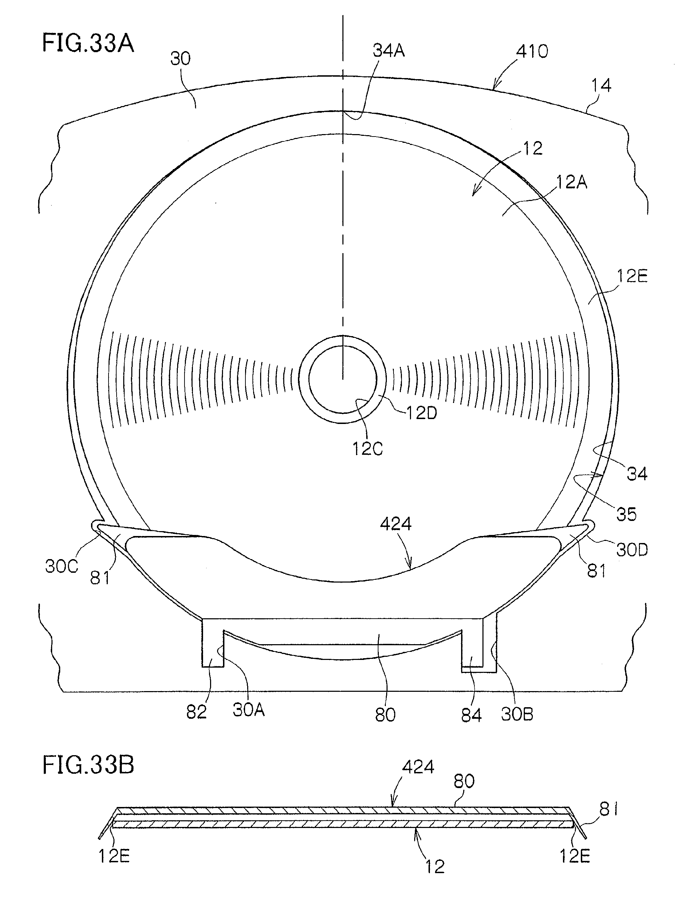

The position-restricting portions 81 are formed of an elastic material, such as rubber, which has a high coefficient of friction with respect to the disk medium 12, and as shown in Fig. 28 and Fig. 33A, are formed substantially in the shape of a wedge, when viewed from the top. As shown in Fig. 33B, these position-restricting portions 81 are molded, being folded at a predetermined angle toward the non-recording surface 12A of the disk medium 12 for pressing the edge of the outer peripheral edge portion 12E in the rear portion of the disk medium 12 on the top surface (non-recording surface 12A) side in the radial direction from the outside of the disk medium 12. Therefore, the disk medium 12 is moved toward the front side, although the amount of movement is slight, to abut a front end inner surface 34A at the right and left center, when viewed from the top, of the inner peripheral wall 34 constituting the disk opening 35 (see Fig. 28 and Fig. 33A).

In the respective rear portions of the pair of arms 82, 84, the cylindrical shaft 86 is protruded inward in the horizontal direction, and is rotatably held in the space formed between the shaft holder 56 of the lower shell 28 and the bearing 36 of the upper shell 26. Further, as shown in Fig. 30, from the inner surface (the bottom) of one (right side) arm 84 is protruded an retaining pin 88 for retaining a substantially annular hook 90B which is formed at the other end of the coil spring 90. The disk holder 424 is always urged toward the disk medium 12 by the coil spring 90 which is stretched between the retaining pins 38, 88 (is installed with a predetermined tension given).

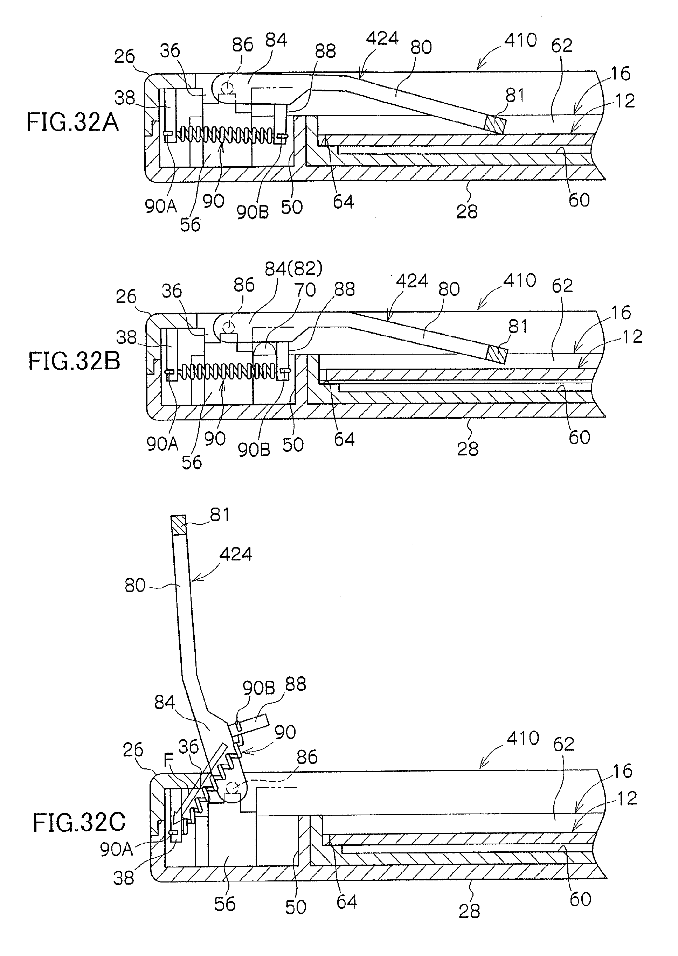

The inner surface of the other (left side) arm 82 is provided as a functional surface which is to be lifted, being engaged with (butted against) the engaging convex 70 which is protruded from the top surface of the annular wall 62 of the inner rotor 16, and as shown in Fig. 32B, when the disk medium 12 is in operation (when it is rotated), the disk holder 424 is held in the slightly lifted position by the engaging convex 70 against the urging force of the coil spring 90 in order to allow the disk medium 12 to be rotated.

Further, when the disk medium 12 is to be taken out from the disk opening 35, the disk holder 24 is rotated rearward by hand to the removal position (the maximum rotating position), the urging force and the installation position of the coil spring 90 being defined such that the disk holder 424 is temporarily held in that position.

In other words, the protruding locations of the retaining pins 38, 88 are defined such that, when the disk holder 24 is rotated to the maximum rotating position (the removal position), where the outer surface (the top surface) of the other (left side) arm 82 abuts the rear side edge portion of the cutout 30A formed in the top plate 30, the coil spring 90 is brought into the cutout 30B, which is cut out more widely, resulting in the urging force being directed in the direction of arrow F beyond the shaft 86, when viewed from the side, as shown in Fig. 32C.

Therefore, the disk holder 424 is capable of being temporarily held in the removal position (the maximum rotating position), thus the disk holder 424 is capable of being held in the three statuses (positions), i.e., the storing position for holding the disk medium 12, the operating position for allowing the disk medium 12 to be rotated, and the removal position for allowing the disk medium 12 to be taken out.

As shown in Fig. 32A and Fig. 32B, this disk holder 424 is configured such that it will not be protruded over the top surface of the casing 14 (the top plate 30), when viewed from the side, in the positions other than the removal position for taking out the disk medium 12 (especially in the operating position). Therefore, compared to the disk cartridge 410 with which the disk holder 424 is protruded over the top surface of the casing 14 (the top plate 30) especially in the operating position, the disk cartridge 410 according to the present embodiment allows the drive apparatus to be made still thinner.

When the upper shell 26 is placed on the lower shell for assembling the casing 14, the shaft 86 of the disk holder 424 is rotatably held by the bearing 36 and the shaft holder 56. Therefore, after assembling the casing 14, the disk holder 424 is not capable of being separated from the casing 14. In other words, if the disk holder 424 is capable of being easily separated from the casing 14 even after assembling the casing 14, the user may accidentally lose the disk holder. However, the disk holder 424 according to the present embodiment is not capable of being separated from the casing 14, as long as the casing 14 is disassembled. Therefore, no troubles, such as the disk holder 424 being lost, will be caused.

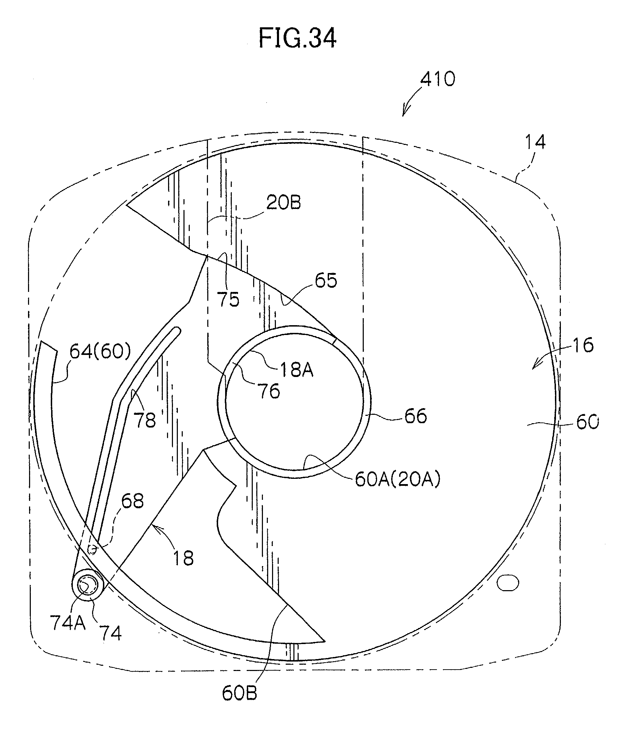

Next, the operation of the disk cartridge 410 as configured above will be described. As can be seen from Fig. 34, which illustrates the disk cartridge 410 excluding the upper shell 26 and the disk medium 12, when the disk cartridge 410 is not in use (when the disk medium 12 is in storage), the opening 20 (the window 20B for recording and/or reproducing head) is closed by the first shutter member 60 and the second shutter member 18.

In other words, the first shutter member 60 and the second shutter member 18 close the window 20B for recording and/or reproducing head by butting their respective abutting portions 65, 75 against each other. The abutting portions 65, 75 may be formed, being provided with a tapered surface or a shouldered portion such that they can be overlapped one upon the other. This configuration allows dirt, dust, and the like to be positively prevented from getting in into the casing 14.

The inner peripheral edge support portions 66, 76 are annularly formed by their sides abutted against each other. The engaging protrusion 68 protruded from the bottom of the inner rotor 16 penetrates through the rear end of the guide hole 78 in the second shutter member 18 to be inserted into the recess 54 of the lower shell 28. Further, the disk support 22 is held in the lifted position to close the cutout 62A.

Therefore, the disk medium 12 is accommodated in the accommodation area, the chucking area 12D on the recording surface 12B side being supported by the inner peripheral edge support portions 66, 76, and the outer peripheral edge portion 12E on the recording surface 12B side being supported by the outer peripheral edge support portion 64, thus the recording surface 12B is completely shut off from the outside. In other words, since this disk cartridge 410 is provided with the disk opening 35, dirt, dust, and the like can be deposited on the non-recording surface 12A of the disk medium 12. However, when not in use, the opening 20 (the window 20B for recording and/or reproducing head) is closed by the first shutter member 60 and the second shutter member 18, thus no dirt, dust, and the like will be deposited on the recording surface 12B.

As can be seen from Fig. 28 and Fig. 32A, which illustrate the disk cartridge 410 including the upper shell 26 and the disk medium 12, when the disk cartridge 410 is not in use (when the disk medium 12 is in storage), the disk holder 424 holds down the non-recording surface 12A of the disk medium 12 by the urging force of the coil spring 90. More particularly, the position-restricting portions 81 which are formed of an elastic material, such as rubber, which has a high coefficient of friction with respect to the disk medium 12, and are integrally attached to both right and left tips of the holding-down portion 80 abut the edge of the outer peripheral edge portion 12E on the non-recording surface 12A side of the disk medium 12 in the radial direction from the outside of the disk medium 12 for pressing it toward the front side and holding it.

Therefore, the disk medium 12 is held mainly by the position-restricting portions 81 at both right and left tips, and the front end inner surface 34A of the inner peripheral wall 34 constituting the disk opening 35, i.e., at three points in total in the accommodation area. In this way, the disk medium 12 will be prevented from coming off from the disk opening 35, or rattle during transportation and the like. Therefore, there is no possibility of the casing 14 or the disk medium 12 being damaged, resulting in occurrence of dirt and dust, such as abrasion chips.

In addition, the position-restricting portions 81 abut only the outer peripheral edge portion 12E of the disk medium 12, thus, the trouble of the printing surface (the non-recording surface 12A between the chucking area 12D and the outer peripheral edge portion 12E) of the disk medium 12 being damaged will not occur. Further, the position-restricting portions 81 are formed of an elastic material which has a high coefficient of friction with respect to the disk medium 12. Thus, the disk medium 12 can be efficiently pressed toward the front side, and the movement (rattle) of the disk medium 12 in the radial direction and the circumferential direction can be adequately suppressed.

Moreover, the non-recording surface 12A (the printing surface) of the disk medium 12 is always exposed to the outside by the disk opening 35, thus, the contents of the disk medium 12, or the like, printed on the non-recording surface 12A can be easily comprehended by the user. In addition, the contents printed on the non-recording surface 12A can enhance the graphical design function of the disk medium 12, which results in the graphical design function of the disk cartridge 410 being able to be enhanced.

Such a disk cartridge 410 is loaded to the drive apparatus for recording or reproducing. When the disk cartridge 410 is loaded in the loading opening in the drive apparatus, the first shutter member 60 (the inner rotor 16) and the second shutter member 18 are rotated in opposite directions, respectively, whereby the opening 20 (the window 20B for recording and/or reproducing head) is opened, and into the positioning holes 44A, 46A, the positioning pins (not shown) of the drive apparatus are inserted for positioning the disk cartridge 410 in the drive apparatus.

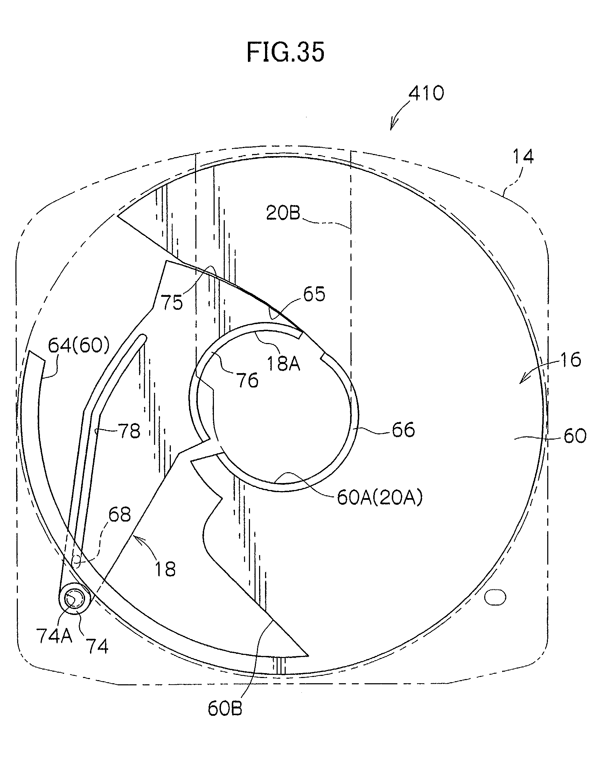

Then, the opening and closing member (not shown) of the drive apparatus is engaged with the operating protrusion 72 which is protruded from the front end of the shutter operating window 52, and moves the operating protrusion 72 toward the rear of the casing 14. Then, as shown in Fig. 35, the inner rotor starts rotating in a clockwise direction along the inner wall 50 around the hub hole 20A, the abutting portions 65, 75 and the sides of the inner peripheral edge support portions 66, 76 starting being separated from each other. And, as is the case with the first embodiment, the cam protrusion 22C of the disc support 22 starts engaging with the cam shoulder 62C of the annular wall 62, the disc support 22 being lowered along the guide pin 58. With the disc support 22 being lowered, the inner rotor 16 is completely allowed to be rotated.

At this time, the engaging protrusion 68 starts sliding in the guide hole 78, the second shutter member 18 starting rotating in a counterclockwise direction about the boss 44. Further, at this time, because the recess 54 has a gently sloped surface at least at the end where the engaging protrusion 68 is to slide out, the engaging protrusion 68 smoothly comes off from the inside of the recess 54 as the inner rotor 16 is rotated, then starting sliding on the bottom plate 40 of the lower shell 28.

Here, because the engaging protrusion 68 is formed higher than the plate thickness of the second shutter member 18, the inner rotor 16 is lifted by the engaging protrusion 68 to a predetermined level from the level of the second shutter member 18 and that of the bottom plate 40 of the lower shell 28 at least in the vicinity of the engaging protrusion 68. In other words, with the outer peripheral edge portion 12E on the recording surface 12B side being supported by the outer peripheral edge support portion 64, the chucking area 12D on the recording surface 12B side is separated from the inner peripheral edge support portion 76 of the second shutter member 18. In this way, the second shutter member 18 is allowed to be rotated in a counterclockwise direction without the inner peripheral edge support portion 76 contacting the recording surface 12B.

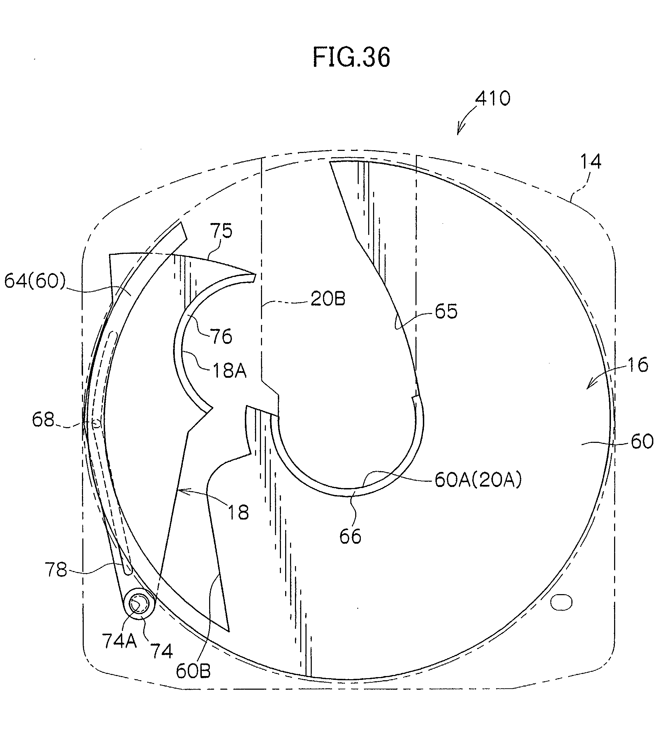

Thereafter, as shown in Fig. 36, the inner rotor 16 is further rotated in a clockwise direction, and therewith, the second shutter member 18 is rotated in a counterclockwise direction, whereby the window 20B for recording and/or reproducing head starts opening. Further, when the engaging protrusion 68 reaches the midway where the guide hole 78 is folded, the second shutter member 18 stops being rotated in a counterclockwise direction. At this time, the right front end of the cutout 18A (the inner peripheral edge support portion 76), which is provided in the rightmost portion of the second shutter member 18, is positioned on the left side of the left end edge of the window 20B for recording and/or reproducing head.

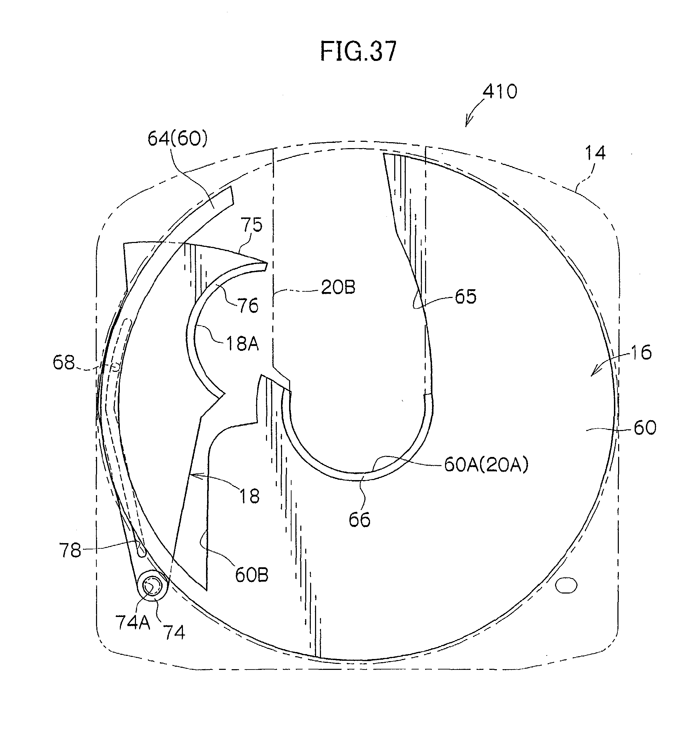

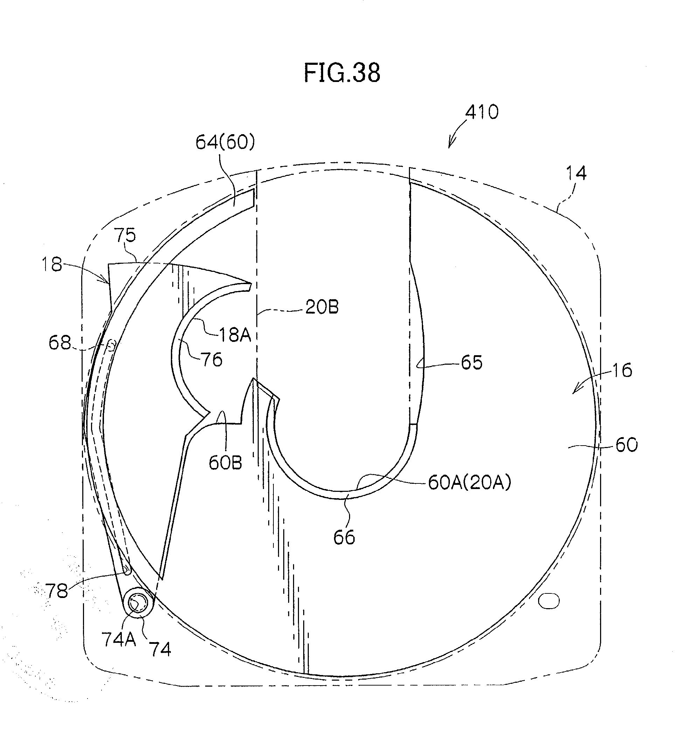

On the other hand, as shown in Fig. 37, even after the rotation of the second shutter member 18 being stopped, the inner rotor 16 is further rotated in a clockwise direction, and therewith, the engaging protrusion 68 slides in the guide hole 78. And, when the engaging protrusion 68 reaches the front end of the guide hole 78, the window 20B for recording and/or reproducing head is completely opened as shown in Fig. 38. At this time, the operating protrusion 72 is positioned at the rear end of the shutter operating window 52, the engaging protrusion 68 being inserted into the recess 55 of the lower shell 28. This recess 55 also has a gently sloped surface at least at the end where the engaging protrusion 68 is to slide in, thus the engaging protrusion 68 is smoothly inserted into the inside of the recess 55.

In this way, the inner rotor 16 is lowered onto the second shutter member 18 and onto the bottom plate 40 of the lower shell 28. However, at this time, the center hole 12C and the chucking area 12D of the disk medium 12 have already been held (chucked) by the rotating spindle of the drive apparatus that was advanced from the hub hole 20A and the chucking member which was advanced from the disk opening 35, the disk medium 12 itself having been lifted to the rotation permissible position (the outer peripheral edge portion 12E on the recording surface 12B side having been separated from the outer peripheral edge support portion 64). Thus, the recording surface 12B will not be contacted with the inner peripheral edge support portion 76 of the second shutter member 18.

When the rotating spindle and the chucking member hold (chuck) the chucking area 12D, the disk medium 12 is moved toward the front side by the disk holder 424 (the position-restricting portions 81), although the amount of movement is slight, there will be no obstacle to the holding (chucking) by the rotating spindle and the chucking member.

On the other hand, when the disk cartridge 410 is to be taken out from the drive apparatus, the positioning pins are first extracted from the positioning holes 44A, 46A, the disk cartridge 410 being released from the positioning in the drive apparatus. Then, by the discharging mechanism or the like (not shown) in the drive apparatus, the disk cartridge 410 starts moving in the direction in which it is discharged from the loading opening in the drive apparatus.

Then, the opening and closing member of the drive apparatus starts moving the operating protrusion 72 which is protruded from the rear end of the shutter operating window 52, toward the front side of the casing 14, the inner rotor 16 starting rotating in a counterclockwise direction in Fig. 34 to Fig. 38 along the inner wall 50 around the hub hole 20A. And, the engaging protrusion 68, which has been positioned at the front end of the guide hole 78 starts moving toward the rear side of the casing 14 along the guide hole 78, and comes off from the recess 55. In this case, because the recess 55 has a gently sloped surface at least at the end where the engaging protrusion 68 is to slide out, the engaging protrusion 68 smoothly comes off from the inside of the recess 55.

As the inner rotor 16 is rotated, the engaging convex 70 is disengaged from the arm 82. In this way, the position-restricting portions 81 of the disk holder 424 again press the outer peripheral edge portion 12E of the disk medium 12 toward the front side by the urging force of the coil spring 90, holding the disk medium 12 together with the front end inner surface 34A of the inner peripheral wall 34.

Then, when the inner rotor 16 is rotated in a counterclockwise direction, and the engaging protrusion 68 passes the midway where the guide hole 78 is folded, the second shutter member 18 starts rotating in a clockwise direction. At this time, the holding (chucking) of the disk medium 12 by the rotating spindle and the chucking member has already been released. However, the engaging protrusion 68 has come off from the recess 55, and is sliding on the bottom plate 40, thus, the inner rotor 16 has been lifted to a predetermined level at least in the vicinity of the engaging protrusion 68. Therefore, the inner peripheral edge support portion 76 of the second shutter member 18 will not be contacted with the recording surface 12B.

Further, as the inner rotor 16 is rotated in a counterclockwise direction, and the second shutter member 18 is rotated in a clockwise direction, the window 20B for recording and/or reproducing head is closed, and therewith, the cam protrusion 22C starts engaging with the cam shoulder 62C, the disc support 22 being lifted along the guide pin 58. And, as shown in Fig. 34, the abutting portion 65 abuts the abutting portion 75, the sides of the inner peripheral edge support portion 66 being abutted to the sides of the inner peripheral edge support portion 76, whereby the window 20B for recording and/or reproducing head is closed, and the cutout 62A is closed by the disk support 22.

In any case, as stated above, the position-restricting portions 81 which are formed of an elastic material which has a high coefficient of friction with respect to the disk medium 12 are integrally attached to both right and left tips of the holding-down portion 80 of the disk holder 424, and, when the disk medium 12 is not in use, the position-restricting portions 81 press the outer peripheral edge portion 12E in the rear portion thereof toward the front side. In this way, the disk medium 12 is efficiently held by the front end inner surface 34A of the inner peripheral wall 34 constituting the disk opening 35, and the position-restricting portions 81, i.e., at three points in total. Thus, the disk medium 12 will be prevented from rattling in the accommodation area during transportation and the like.

Because the disk medium 12 is held by the position-restricting portions 81 of the disk holder 424, and the front end inner surface 34A of the inner peripheral wall 34 of the upper shell 26, the number of parts can be reduced, compared to the disk cartridge 410 which provides a separate member for prevention of the medium disk 12 from rattling. Yet, the position-restricting portions 81 of the disk holder 424 presses only the outer peripheral edge portion 12E of the disk medium 12 for holding it, there is no possibility of the printing surface (the non-recording surface 12A) between the chucking area 12D and the outer peripheral edge portion 12E of the disk medium 12 being damaged. In the present embodiment, the configuration in which the position-restricting portions 81 are integrally attached to the holding-down portion 80 is used. However, the holding-down portion 80 and the position-restricting portions 81 may be integrally molded from the same material.

In the present embodiment, it is assumed that the recording surface 12B is formed only on one side of the disk medium 12. However, even for disk media with which the recording surface is provided on both sides, the present embodiment is applicable, because the portion which is held down by the disk holder 24 (the position-restricting portions 81) is limited to the outer peripheral edge portion 12E of the disk medium 12. In addition, the disk medium 12 may be, for example, a disk medium which is specialized for reproduction, allowing no pieces of information to be recorded by the user.

In the forgoing paragraphs, the disk cartridges 10, 210, 310, and 410 according to the first to fourth embodiments of the present invention have been described on the assumption of that the diameter of the disk medium is approximately 120 mm. However, the present invention is not limited to this, and it will be understood that the present invention is applicable to a disk cartridge comprising a disk medium having any dimension.

In any case, as described above, the present invention is capable of providing a disk cartridge with which the advantage of the thin construction will not be cancelled in operation of the disk medium, and there is no possibility of the printing surface, which is the non-recording surface, being damaged while storage.

In addition, the present invention is capable of providing a disk cartridge with which, even if the casing is held with the disk holder formed of plastic resin, the deflection deformation thereof is capable of being adequately suppressed, and thus no operational uneasiness is given to the user.

Further, the present invention is capable of providing a disk cartridge with which the operability of the disk holder can be improved.

Still further, the present invention is capable of providing a disk cartridge with which, during transportation and the like, the disk medium is adequately prevented from rattling without the printing surface of the disk medium being damaged.

## Claims

1. A disk cartridge comprising:
a disk medium on one face of which a recording surface is formed and on the other face of which a non-recording surface is formed;
a casing having a disk opening which allows removal of the disk medium, exposing the non-recording surface, and an opening which allows access to the recording surface, being opened and closed by a shutter member; and
a disk holder which is rotatably provided in the casing, and which presses and holds the non-recording surface when the disk medium is in storage, and is separated from the non-recording surface when the disk medium is in operation and when taken out,
the disk holder being configured such that it will not protrude over the top surface of the casing, when viewed from the side, except when the disk medium is to be taken out.

2. The disk cartridge of claim 1, wherein the disk holder is configured such that it is capable of being held in the positions corresponding to the three different statuses: a) when the disk medium is in storage; b) when the same is in operation; and c) when the same is taken out.

3. The disk cartridge of claim 1, wherein the disk holder is constituted by an arm which is rotatably supported in the casing, and to which an urging mechanism for urging the disk holder toward the disk medium is mounted, and a holding-down portion substantially in the shape of a crescent, when viewed from the top, that is connected to the tip of the arm.

4. The disk cartridge of claim 3, wherein, when the disk medium is in storage, both ends of the holding-down portion abut the outer peripheral edge portion of the disk medium.

5. The disk cartridge of claim 3, wherein a pair of the arms are symmetrically provided, and to one arm, the urging mechanism is mounted, the other arm being pushed upward such that the holding-down portion is separated from the disk medium, when the disk medium is in operation.

6. The disk cartridge of claim 1, wherein the disk holder is configured such that it is not capable of being separated from the casing.

7. The disk cartridge of claim 1, wherein, at least on the top surface of the disk holder, an identification mechanism for identifying the disk holder is provided.

8. A disk cartridge comprising:
a disk medium on one face of which a recording surface is formed and on the other face of which a non-recording surface is formed;
a casing having a disk opening which permits removal of the disk medium, exposing the non-recording surface, and an opening which allows access to the recording surface, being opened and closed by a shutter member; and
a disk holder which is rotatably provided in the casing, and which presses and holds the non-recording surface when the disk medium is not in use, and is separated from the non-recording surface when the disk medium is in use,
wherein protrusions which abut the non-recording surface of the disk medium when the disk holder is deflected from the inner surface of the disk holder.

9. The disk cartridge of claim 8, wherein the protrusions abut the outer peripheral edge portion of the disk medium.

10. The disk cartridge of claim 8, wherein the disk holder is constituted by an arm which is rotatably supported in the casing, and a holding-down portion substantially in the shape of a crescent, when viewed from the top, that is connected to the tip of the arm, the protrusions being provided in the vicinity of the connecting portion between the arm and the holding-down portion.

11. The disk cartridge of claim 8, wherein the protrusions are formed in the shape of a column.

12. A disk cartridge comprising:
a casing which joins an upper shell having a disk opening which allows removal of a disk medium, exposing a non-recording surface, to a lower shell having an opening which allows access to a recording surface, being opened and closed by a shutter member;
a disk holder which is rotatably provided in the rear portion of the casing, and which presses and holds the non-recording surface when the disk medium is in storage, and is separated from the non-recording surface when the disk medium is in operation and when taken out;
a first retaining protrusion which protrudes from the inner surface of the disk holder in front of the rotation axis of the disk holder in the casing;
a second retaining protrusion which protrudes from the inner surface of the upper shell behind the rotation axis of the disk holder except on an imaginary line which passes through the first retaining protrusion and is orthogonalized with the rotation axis; and
an urging mechanism which is stretched between the first retaining protrusion and the second retaining protrusion such that the urging mechanism is positioned under the rotation axis, when viewed from the side, when the disk medium is in storage, and is positioned above, when viewed from the side, said rotation axis when the disk medium is taken out.

13. The disk cartridge of claim 12, wherein the urging mechanism has a substantially annular hook at least at one end, and the hook is slidably fitted to the first retaining protrusion.

14. The disk cartridge of claim 12, wherein an accommodating portion which allows the movement of the urging mechanism when the disk holder is rotated to the position for removing the disk medium is formed in the upper shell.

15. The disk cartridge of claim 12, wherein, when the disk medium is in storage, both ends of the holding-down portion abut the outer peripheral edge portion of the disk medium.

16. The disk cartridge of claim 12, wherein the urging mechanism comprises a coil spring.

17. A disk cartridge comprising:
a disk medium on one face of which a recording surface is formed and on the other face of which a non-recording surface is formed;
a casing having a disk opening which allows removal of the disk medium, exposing the non-recording surface, and an opening which allows access to the recording surface, being opened and closed by a shutter member; and
a disk holder which is rotatably provided in the rear portion of the casing, and which presses and holds the non-recording surface when the disk medium is not in use, and is separated from the non-recording surface when the disk medium is in use,
the disk holder pressing the outer peripheral edge portion in the rear portion of the disk medium toward the front side of the disk cartridge.

18. The disk cartridge of claim 17, wherein the disk holder has position-restricting portions which are brought into contact with the outer peripheral edge portion in the radial direction from the outside of the disk medium.

19. The disk cartridge of claim 18, wherein the position-restricting portions are formed of a material which has a high coefficient of friction with respect to the disk medium.

20. The disk cartridge of claim 19, wherein the material which has a high coefficient of friction comprises an elastic material.
